(19) Europäisches Patentamt
European Patent Office
Office européen des brevets

(11) **EP 4 177 647 A1**

(12) **EUROPEAN PATENT APPLICATION**
published in accordance with Art. 153(4) EPC

(43) Date of publication:
**10.05.2023 Bulletin 2023/19**

(21) Application number: **21833228.6**

(22) Date of filing: **01.07.2021**

(51) International Patent Classification (IPC):
***G02B 5/30*** $^{(2006.01)}$ ***C08G 73/10*** $^{(2006.01)}$
***C08J 5/18*** $^{(2006.01)}$ ***C08L 79/08*** $^{(2006.01)}$
***G02B 5/22*** $^{(2006.01)}$ ***G06F 3/041*** $^{(2006.01)}$
***G09F 9/00*** $^{(2006.01)}$ ***G09F 9/30*** $^{(2006.01)}$

(52) Cooperative Patent Classification (CPC):
**C08G 73/10; C08J 5/18; C08L 79/08; G02B 5/22; G02B 5/30; G06F 3/041; G09F 9/00; G09F 9/30**

(86) International application number:
**PCT/JP2021/025015**

(87) International publication number:
**WO 2022/004856 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2020 JP 2020115180**
**29.01.2021 JP 2021013621**

(71) Applicants:
- **SUMITOMO CHEMICAL COMPANY, LIMITED**
**Tokyo 103-6020 (JP)**
- **Zymergen Inc.**
**Emeryville, CA 94608 (US)**

(72) Inventors:
- **SAKURAI, Takashi**
**Tsukuba-shi, Ibaraki 300-3294 (JP)**
- **SCHROEDER, Christiaan**
**Emeryville, California 94608 (US)**
- **BLOM, Matt**
**Emeryville, California 94608 (US)**
- **CHU, Lennon**
**Emeryville, California 94608 (US)**

(74) Representative: **J A Kemp LLP**
**80 Turnmill Street**
**London EC1M 5QU (GB)**

(54) **OPTICAL FILM**

(57) The present invention relates to an optical film having a glass transition temperature of 165°C or higher, an optical transmittance at 350 nm of 10% or less, an in-plane retardation of 30 nm or less, and a retardation in a thickness direction of 100 nm or less.

## Description

TECHNICAL FIELD

The present invention relates to an optical film for use as a material or the like of flexible display devices, and a flexible display device comprising the optical film.

BACKGROUND ART

Optical films are used in various applications including display devices such as liquid crystal displays and OLEDs, touch sensors, speakers, and semiconductors. For example, as a touch sensor substrate material, a cyclic olefin-based film having a low retardation and the like (for example, Patent Document 1), an aromatic polyimide film and an aliphatic polyimide film having dimensional stability (for example, Patent Documents 2 and 3) are known.

PRIOR ART DOCUMENTS

PATENT DOCUMENTS

Patent Document 1: JP-A-2004-156048
Patent Document 2: JP-A-2005-336243
Patent Document 3: WO 2019/156717 A

SUMMARY OF THE INVENTION

PROBLEMS TO BE SOLVED BY THE INVENTION

However, cyclic olefin-based films as in Patent Document 1 and aliphatic polyimide films as in Patent Document 3 do not have a sufficient compatibility between heat resistance and UV-blocking property, and aromatic polyimide films as in Patent Document 2 have a problem of exhibiting high retardation. As described above, according to the study by the present inventors, it has been found that it is difficult to simultaneously satisfy a low retardation, high heat resistance, and a high UV-blocking property.

Therefore, an object of the present invention is to provide an optical film having a low retardation, high heat resistance, and a high UV-blocking property, and a flexible display device comprising the optical film.

MEANS FOR SOLVING THE PROBLEMS

As a result of intensive studies to solve the above problems, the present inventors have accomplished the present invention by finding that the above problems can be solved by adjusting, in an optical film, the glass transition temperature and the optical transmittance at 350 nm to 165°C or higher and 10% or less, respectively, and adjusting the in-plane retardation and the retardation in the thickness direction to 30 nm or less and 100 nm or less, respectively. That is, the present invention includes the following preferred embodiments.

[1] An optical film having a glass transition temperature of 165°C or higher, an optical transmittance at 350 nm of 10% or less, an in-plane retardation of 30 nm or less, and a retardation in a thickness direction of 100 nm or less.
[2] The optical film according to [1], wherein the glass transition temperature is higher than 180°C.
[3] The optical film according to [1] or [2], wherein the optical film has an optical transmittance at 500 nm of 90% or more.
[4] The optical film according to any one of [1] to [3], wherein the optical film has a tensile strength of more than 86 MPa.
[5] The optical film according to any one of [1] to [4], wherein the optical film has a film thickness of 10 to 100 μm.
[6] The optical film according to any one of [1] to [5], wherein the optical film has a solvent content of 3.0% by mass or less based on a mass of the optical film.
[7] The optical film according to any one of [1] to [6], comprising a polyimide-based resin having a constitutional unit represented by Formula (1)

[Chemical Formula 1]

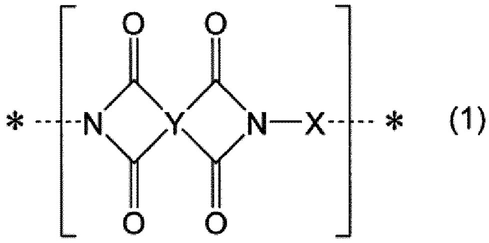

wherein X represents a divalent organic group, Y represents a tetravalent organic group, and * represents a bonding hand.

[8] The optical film according to [7], wherein the constitutional unit represented by Formula (1) comprises a divalent aliphatic group as X.

[9] The optical film according to [7] or [8], wherein the constitutional unit represented by Formula (1) comprises, as Y, a structure represented by Formula (2)

[Chemical Formula 2]

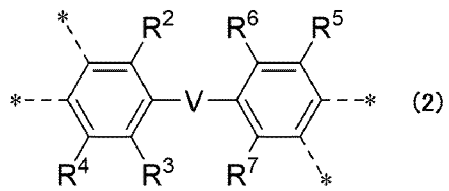

wherein $R^2$ to $R^7$ each independently represent a hydrogen atom, an alkyl group having 1 to 6 carbon atoms, an alkoxy group having 1 to 6 carbon atoms, or an aryl group having 6 to 12 carbon atoms, the hydrogen atoms contained in $R^2$ to $R^7$ are each independently optionally substituted by a halogen atom, V represents a single bond, -O-, $-CH_2-$, $-CH_2-CH_2-$, $-CH(CH_3)-$, $-C(CH_3)_2-$, $-C(CF_3)_2-$, $-SO_2-$, -S-, -CO-, or $-N(R^8)-$, $R^8$ represents a hydrogen atom or a monovalent hydrocarbon group having 1 to 12 carbon atoms which is optionally substituted with a halogen atom, and * represents a bonding hand.

[10] The optical film according to any one of [7] to [9], wherein the polyimide-based resin contains a fluorine atom.

[11] The optical film according to any one of [7] to [10], wherein the polyimide-based resin has a weight average molecular weight (Mw) of more than 250,000.

[12] A flexible display device comprising the optical film according to any one of [1] to [11].

[13] The flexible display device according to [12], further comprising a polarizer.

[14] The flexible display device according to [12] or [13], further comprising a touch sensor.

EFFECTS OF THE INVENTION

The optical film of the present invention can have a low retardation, high heat resistance, and a high UV-blocking property. Therefore, it can be suitably used as a material for a flexible display device and the like.

EMBODIMENTS OF THE INVENTION

[Optical film]

The optical film of the present invention has a glass transition temperature of 165°C or higher, an optical transmittance at 350 nm of 10% or less, an in-plane retardation of 30 nm or less, and a retardation in a thickness direction of 100 nm or less.

When the present inventors adjusted the in-plane retardation of an optical film to 30 nm or less, the retardation in the thickness direction to 100 nm or less, and the optical transmittance at 350 nm to 10% or less and further adjusted the glass transition temperature to 165°C or higher, they have found that a low retardation, high heat resistance, and a high UV-blocking property can be simultaneously satisfied.

The optical film of the present invention has a glass transition temperature (hereinafter, sometimes abbreviated as Tg) of 165°C or higher. When the glass transition temperature is lower than 165°C, heat resistance is not sufficient. In addition, tensile strength and bending resistance may not be sufficient. The glass transition temperature of the optical film of the present invention is preferably 170°C or higher, more preferably 175°C or higher, still more preferably 180°C or higher, particularly preferably higher than 180°C, especially preferably 180.5°C or higher, and most preferably 181°C or higher, and is preferably 400°C or lower, more preferably 380°C or lower, still more preferably 350°C or lower, and particularly preferably 300°C or lower. When the glass transition temperature is equal to or higher than the above lower limit, heat resistance can be improved, and tensile strength and bending resistance can be easily enhanced. When the glass transition temperature is equal to or lower than the above upper limit, optical characteristics can be easily enhanced. In the present description, the optical characteristics mean optical characteristics of an optical film including a retardation, transparency, and UV-blocking property. That the optical characteristics are improved or enhanced means, for example, that the retardation is reduced, that the optical transmittance at 500 nm is increased (or the transparency is increased), and that the optical transmittance at 350 nm is reduced (or the UV-blocking property is increased). That an optical film is superior in optical characteristics mean that the optical film exhibits a low retardation, a high optical transmittance at 500 nm (or high transparency), and a low optical transmittance at 350 nm (or high UV-blocking property). The glass transition temperature (Tg) can be adjusted to within the above range by appropriately adjusting the type and constitution ratio of the constitutional units constituting the resin contained in the optical film, the solvent content of the optical film, the type and blending amount of additive, the production conditions of the resin and the purity of monomers, and the production conditions of the optical film. In particular, the glass transition temperature may be adjusted to within the above range, for example, by employing the below-described preferable type and constitution ratio of the constitutional units constituting the resin, adjusting the solvent content of the optical film, and applying the drying conditions in the below-described optical film production process.

The glass transition temperature in the present invention is a glass transition temperature by DSC (differential scanning calorimetry). The glass transition temperature can be measured using a thermal analyzer under the conditions of a measurement sample amount of 5 mg, a temperature range of from room temperature to 400°C, and a temperature raising rate of 10°C/min, and can be measured, for example, by the method described in EXAMPLES.

The optical film of the present invention has an optical transmittance at 350 nm of 10% or less. When the optical transmittance at 350 nm exceeds 10%, the UV-blocking property tends to deteriorate. The optical transmittance at 350 nm of the optical film of the present invention is preferably 8% or less, and more preferably 5% or less. When the optical transmittance at 350 nm is equal to or less than the above upper limit, the UV-blocking property can be improved. The lower limit of the optical transmittance at 350 nm is 0%. The optical transmittance at 350 nm can be measured using a UV-Visible/NIR spectrophotometer, and can be measured by, for example, the method described in EXAMPLES. The optical transmittance at 350 nm is preferably an optical transmittance in the range of the thickness (film thickness) of the optical film of the present invention. The optical transmittance at 350 nm can be adjusted to within the above range by appropriately adjusting the type and constitution ratio of the constitutional units constituting the resin contained in the optical film, the thickness of the optical film, the solvent content of the optical film, the type and blending amount of additives, the production conditions of the resin and the purity of monomers, and the production conditions of the optical film. For example, the optical transmittance at 350 nm can be easily adjusted to within the above range by appropriately adjusting the type and amount of ultraviolet absorbers contained in the optical film.

The optical film of the present invention has an in-plane retardation (retardation in an in-plane direction) of 30 nm or less and a retardation in a thickness direction of 100 nm or less. When the in-plane retardation is more than 30 nm and the retardation in the thickness direction is more than 100 nm, the visibility is not sufficient when applied to a display device or the like. The retardation in the thickness direction Rth of the optical film of the present invention is represented by equation (A):

$$Rth = \{(Nx + Ny)/2 - Nz\} \times d \quad \cdots \text{(A)}$$

[wherein Nx represents a refractive index in one direction in the optical film surface, Ny represents a refractive index in a direction orthogonal to Nx in the optical film surface, Nz represents a refractive index in a thickness direction of the optical film, d represents a thickness (nm) of the optical film, and Nx > Ny is satisfied].

That is, Nx is a refractive index in a slow axis direction, Ny is a refractive index in a fast axis direction, and Nx - Ny is birefringence.

The retardation in the thickness direction Rth of the optical film of the present invention is preferably 90 nm or less, more preferably 80 nm or less, still more preferably 70 nm or less, and is preferably 1 nm or more, and more preferably 5 nm or more. When the retardation in the thickness direction Rth is equal to or less than the above upper limit, visibility can be improved in the application of the optical film to a display device or the like, and when the retardation in the thickness direction Rth is equal to or more than the above lower limit, unevenness of visibility hardly occurs.

The in-plane retardation R0 of the optical film of the present invention is represented by equation (B):

$$R0 = (Nx - Ny) \times d\ (nm) \quad \cdots \quad (B)$$

[wherein Nx, Ny, and d are the same as Nx, Ny, and d in equation (A)].

The in-plane retardation R0 of the optical film of the present invention is preferably 20 nm or less, more preferably 15 nm or less, still more preferably 10 nm or less, and is preferably 0.1 nm or more, and more preferably 1 nm or more. When the in-plane retardation R0 is equal to or less than the above upper limit, visibility can be improved in the application of the optical film to a display device or the like, and when the in-plane retardation R0 is equal to or more than the above lower limit, unevenness of visibility hardly occurs.

The retardation in the thickness direction Rth and the in-plane retardation R0 of an optical film can be measured using a retardation measuring device, and can be measured by, for example, the method described in EXAMPLES. Rth and R0 can be adjusted to within the above ranges by appropriately adjusting the type, constitution ratio, or molecular weight of the constitutional units constituting the resin contained in the optical film, the thickness of the optical film, the solvent content of the optical film, the type and blending amount of additive, the production conditions of the resin and the purity of monomers, and the production conditions of the optical film, and in particular, they can be easily adjusted to within the above ranges by making the resin contained in the optical film to contain a constitutional unit having an acyclic aliphatic structure as a constitutional unit constituting the resin.

The optical film of the present invention preferably has an optical transmittance at 500 nm of 90.0% or more. Therefore, in a preferred embodiment of the present invention, the optical film can achieve both the blocking property in the ultraviolet region and the transmittance in the visible region. The optical transmittance at 500 nm is more preferably 90.2% or more, and still more preferably 90.4% or more. When the optical transmittance at 500 nm is equal to or more than the above lower limit, it is easy to enhance the visibility when applied to a display device or the like. The upper limit of the optical transmittance at 500 nm is 100%. The optical transmittance at 500 nm can be measured using a UV-Visible/NIR spectrophotometer, and can be measured by, for example, the method described in EXAMPLES. The optical transmittance at 500 nm is preferably an optical transmittance in the range of the thickness (film thickness) of the optical film of the present invention, and is particularly an optical transmittance when the thickness of the optical film is preferably 22 to 40 pm, more preferably 23 to 27 pm, and still more preferably 25 pm. The optical transmittance at 500 nm can be adjusted to within the above range by appropriately adjusting the type and constitution ratio of the constitutional units constituting the resin contained in the optical film, the thickness of the optical film, the solvent content of the optical film, the type and blending amount of additive, the production conditions of the resin and the purity of monomers, and the production conditions of the optical film. In particular, the optical transmittance at 500 nm may be adjusted to within the above range, for example, by employing the below-described preferable type and constitution ratio of the constitutional units constituting the resin, adjusting the solvent content of the optical film, and applying the drying conditions in the below-described optical film production process.

In a preferred embodiment of the present invention, the optical film of the present invention can achieve both superior tensile strength and superior bending resistance in addition to a low retardation, high heat resistance, and a high UV-blocking property. The tensile strength of the optical film of the present invention is preferably 70 MPa or more, more preferably 80 MPa or more, still more preferably 85 MPa or more, yet still more preferably more than 86 MPa, particularly preferably 87 MPa or more, and especially preferably 89 MPa or more, and is preferably 200 MPa or less, and more preferably 180 MPa or less. When the tensile strength is equal to or more than the above lower limit, breakage or the like of the optical film can be easily suppressed, and when the tensile strength is equal to or less than the above upper limit, flexibility can be easily enhanced. The tensile strength can be measured using a tensile tester or the like under the conditions of a chuck distance of 50 mm and a tensile speed of 20 mm/min, and can be measured by, for example, the method described in EXAMPLES.

With the optical film of the present invention, in the MIT folding endurance test in accordance with ASTM D 2176-16, the number of folds at a folding radius of 1 mm is preferably 10,000 folds or more, more preferably 50,000 folds or more, still more preferably 100,000 folds or more, yet still more preferably 200,000 folds or more, particularly preferably 500,000 folds or more, and especially preferably 1,000,000 folds or more. When the number of folds is equal to or more than the above lower limit, it is easy to effectively control the breakage and the like of the optical film even when the optical film is repeatedly folded. The upper limit of the number of folds is usually 50,000,000 folds or less. The number of folds of an optical film can be measured under the conditions of a test speed of 175 cpm, a folding angle of 135°, a load of 0.75 kf, and a folding radius of a folding clamp of 1 mm, and can be measured by, for example, the method described in

EXAMPLES.

The tensile strength and the bending resistance can be adjusted to within the above ranges by appropriately adjusting the type or constitution ratio of the constitutional units constituting the resin contained in the optical film, the solvent content of the optical film, the type and blending amount of additive, the production conditions of the resin and the purity of monomers, and the production conditions of the optical film. In particular, the tensile strength and the bending resistance may be adjusted to within the above range, for example, by employing the below-described preferable type and constitution ratio of the constitutional units constituting the resin, adjusting the solvent content of the optical film, and applying the drying conditions in the below-described optical film production process.

In a preferred embodiment of the present invention, the optical film of the present invention has a solvent content (also referred to as a residual solvent amount) of preferably 3.0% by mass or less, more preferably 2.5% by mass or less, still more preferably 2.0% by mass or less, and preferably 0.01% by mass or more, more preferably 0.1% by mass or more, and still more preferably 0.5% by mass or more, with respect to the mass of the optical film. When the solvent content is equal to or less than the above upper limit, Tg can be easily adjusted to within the above range, and heat resistance, tensile strength, and bending resistance can be easily enhanced. When the solvent content is equal to or more than the above lower limit, optical characteristics can be easily improved, for example, the optical transmittance at 500 nm can be easily increased and the optical transmittance at 350 nm can be easily reduced. The solvent content (residual solvent amount) corresponds to a mass loss ratio S (% by mass) from 120°C to 250°C determined using a TG-DTA measuring apparatus. The mass loss ratio S is determined by, for example, raising the temperature of about 20 mg of an optical film from room temperature to 120°C at a temperature raising rate of 10°C/min, holding the optical film at 120°C for 5 minutes, then performing TG-DTA measurement while raising the temperature (heating) to 400°C at a temperature raising rate of 10°C/min, and calculating the mass loss ratio S, based on a TG-DTA measurement result, according to equation (1):

$$\text{mass loss ratio S (\% by mass)} = 100 - (W1/W0) \times 100 \quad (1)$$

[wherein W0 is a mass of the sample after holding at 120°C for 5 minutes, and W1 is a mass of the sample at 250°C]. For example, it can be measured and calculated by the method described in EXAMPLES. The solvent content may be adjusted to within the above range by appropriately adjusting drying conditions (particularly, drying temperature, drying time, and the like) in the optical film production process described later, for example. For example, the solvent content tends to decrease as the drying temperature increases. In addition, the lower the solvent content, the higher the Tg tends to be.

The thickness of the optical film of the present invention may be appropriately chosen according to the application, and is preferably 5 pm or more, more preferably 10 pm or more, and still more preferably 15 pm or more, and is preferably 100 pm or less, more preferably 80 pm or less, still more preferably 60 pm or less, and particularly preferably 50 pm or less. The thickness of an optical film can be measured using a thickness meter or the like, and can be measured by, for example, the method described in

EXAMPLES.

<Resin>

The optical film of the present invention preferably comprises a resin. The resin is preferably a resin having transparency, and examples thereof include a polyester resin, a polycarbonate resin, a polyallylate resin, a polyethersulfone resin, a polyimide-based resin, a poly(meth)acrylic resin, and a cycloolefin-based resin. These resins may be used singly or two or more of them may be used in combination. Among them, a polyimide-based resin is preferable from the viewpoint of easily enhancing optical characteristics, heat resistance, tensile strength, and bending resistance. The term "polyimide-based resin" means a polymer comprising a repeating structural unit (also referred to as a constitutional unit) containing an imide group, and may further comprise a repeating structural unit containing an amide group.

In a preferred embodiment of the present invention, the optical film of the present invention preferably comprises a polyimide-based resin having a constitutional unit represented by Formula (1)

[Chemical Formula 3]

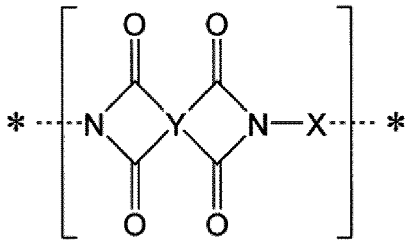

(1)

[wherein X represents a divalent organic group, Y represents a tetravalent organic group, and * represents a bonding hand].

When such a polyimide-based resin is contained, optical characteristics, heat resistance, tensile strength, and bending resistance can be easily enhanced.

X in Formula (1) each independently represents a divalent organic group, and preferably represents a divalent organic group having 2 to 40 carbon atoms. Examples of the divalent organic group include a divalent aromatic group and a divalent aliphatic group, and examples of the divalent aliphatic group include a divalent acyclic aliphatic group and a divalent cyclic aliphatic group. Among them, from the viewpoint of easily enhancing optical characteristics, heat resistance, tensile strength, and bending resistance, a divalent aliphatic group is preferable, and a divalent acyclic aliphatic group is more preferable. In the present description, the divalent aromatic group is a divalent organic group having an aromatic group, and may contain an aliphatic group or other substituents as a part of the structure thereof. The divalent aliphatic group is a divalent organic group having an aliphatic group, and may contain other substituents as a part of the structure thereof, but does not contain any aromatic group.

In one embodiment of the present invention, examples of the divalent aromatic group or the divalent cyclic aliphatic group in X in Formula (1) include groups represented by Formula (10), Formula (11), Formula (12), Formula (13), Formula (14), Formula (15), Formula (16), Formula (17), and Formula (18); groups resulting from substitution of a hydrogen atom in the groups represented by Formulas (10) to (18) with a methyl group, a fluoro group, a chloro group, or a trifluoromethyl group; and chain hydrocarbon groups having 6 or less carbon atoms.

[Chemical Formula 4]

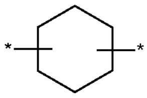

(10)

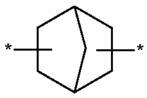

(11)

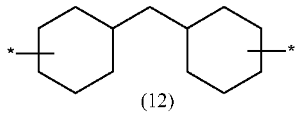

(12)

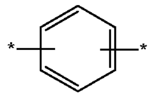

(13)

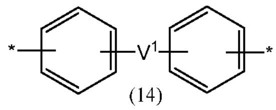

(14)

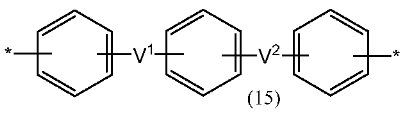

(15)

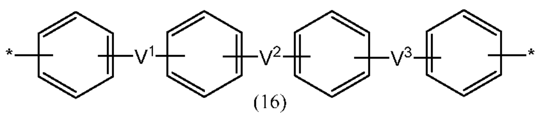

(16)

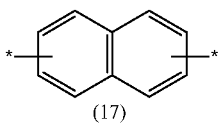

(17)

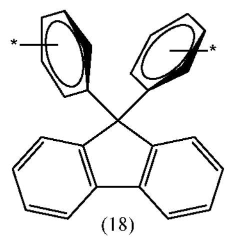

(18)

In Formulas (10) to (18),

* represents a bonding hand,

$V^1$, $V^2$, and $V^3$ each independently represent a single bond, -O-, -S-, - $CH_2$-, -$CH_2$-$CH_2$-, -$CH(CH_3)$-, -$C(CH_3)_2$-, -$C(CF_3)_2$-, -$SO_2$-, -CO-, or -N(Q)-. Q represents a monovalent hydrocarbon group having 1 to 12 carbon atoms optionally substituted with a halogen atom. Examples of the monovalent hydrocarbon group having 1 to 12 carbon atoms optionally substituted with a halogen atom include a methyl group, an ethyl group, an n-propyl group, an

isopropyl group, an n-butyl group, a sec-butyl group, a tert-butyl group, an n-pentyl group, a 2-methyl-butyl group, a 3-methylbutyl group, a 2-ethyl-propyl group, an n-hexyl, an n-heptyl group, an n-octyl group, a tert-octyl group, an n-nonyl group, and an n-decyl group. Examples of the halogen atom include a fluorine atom, a chlorine atom, a bromine atom, and an iodine atom.

In one example, $V^1$ and $V^3$ are each a single bond, -O- or -S-, and $V^2$ is $-CH_2-$, $-C(CH_3)_2-$, $-C(CF_3)_2-$ or $-SO_2-$. The bonding position of $V^1$ and $V^2$ to each ring and the bonding position of $V^2$ and $V^3$ to each ring are, each independently, preferably a meta position or a para position, and more preferably a para position, with respect to each ring. Hydrogen atoms on the rings in Formulas (10) to (18) may be substituted with an alkyl group having 1 to 6 carbon atoms, an alkoxy group having 1 to 6 carbon atoms, or an aryl group having 6 to 12 carbon atoms. Examples of the alkyl group having 1 to 6 carbon atoms include a methyl group, an ethyl group, an n-propyl group, an isopropyl group, an n-butyl group, a sec-butyl group, a tert-butyl group, an n-pentyl group, a 2-methyl-butyl group, a 3-methylbutyl group, a 2-ethyl-propyl group, and an n-hexyl group. Examples of the alkoxy group having 1 to 6 carbon atoms include a methoxy group, an ethoxy group, a propyloxy group, an isopropyloxy group, a butoxy group, an isobutoxy group, a tert-butoxy group, a pentyloxy group, a hexyloxy group, and a cyclohexyloxy group. Examples of the aryl group having 6 to 12 carbon atoms include a phenyl group, a tolyl group, a xylyl group, a naphthyl group, and a biphenyl group. These divalent cyclic aliphatic groups or divalent aromatic groups may be used singly or two or more of them may be used in combination.

In one embodiment of the present invention, examples of the divalent acyclic aliphatic group in X in Formula (1) include linear or branched alkylene groups such as an ethylene group, a trimethylene group, a tetramethylene group, a pentamethylene group, a hexamethylene group, a propylene group, a 1,2-butanediyl group, a 1,3-butanediyl group, a 2-methyl-1,2-propanediyl group, and a 2-methyl-1,3-propanediyl group. A hydrogen atom in the divalent acyclic aliphatic group may be substituted with a halogen atom, and a carbon atom may be replaced by a heteroatom (for example, an oxygen atom or a nitrogen atom). The number of the carbon atoms of the linear or branched alkylene group is preferably 2 or more, more preferably 3 or more, and still more preferably 4 or more, and is preferably 10 or less, more preferably 8 or less, and still more preferably 6 or less from the viewpoint of easily exhibiting optical characteristics, heat resistance, tensile strength, and bending resistance in a well-balanced manner. Among the divalent acyclic aliphatic groups, alkylene groups having 2 to 6 carbon atoms such as an ethylene group, a trimethylene group, a tetramethylene group, a pentamethylene group, and a hexamethylene group are preferable from the viewpoint of easily exhibiting optical characteristics, heat resistance, tensile strength, and bending resistance in a well-balanced manner, and a tetramethylene group is more preferable.

The polyimide-based resin of the present invention may contain more than one type of X, and they may be the same or different from each other. For example, a divalent acyclic aliphatic group and a divalent aromatic group and/or a divalent cyclic aliphatic group may be contained as X in Formula (1).

In one embodiment of the present invention, when a divalent aliphatic group, preferably a divalent acyclic aliphatic group, is contained as X in Formula (1), the proportion of the constitutional unit in which X in Formula (1) is a divalent aliphatic group, preferably a divalent acyclic aliphatic group, is preferably 30 mol% or more, more preferably 50 mol% or more, still more preferably 70 mol% or more, and particularly preferably 90 mol% or more, and is preferably 100 mol% or less, based on the total molar amount of the constitutional unit represented by Formula (1). When the proportion of the constitutional unit in which X is a divalent aliphatic group, preferably a divalent acyclic aliphatic group in Formula (1) is within the above range, the optical characteristics, heat resistance, tensile strength and bending resistance of the optical film can be easily improved. The proportion of the constitutional unit can be measured, for example, by using $^1$H-NMR, or can also be calculated from the charging ratio of the raw materials.

In Formula (1), Y each independently represents a tetravalent organic group, preferably a tetravalent organic group having 4 to 40 carbon atoms, and more preferably a tetravalent organic group having 4 to 40 carbon atoms and having a cyclic structure. Examples of the cyclic structure include alicyclic, aromatic, and heterocyclic structures. The organic group is an organic group in which a hydrogen atom in the organic group is optionally substituted with a hydrocarbon group or a fluorine-substituted hydrocarbon group, and in that case, the number of the carbon atoms of the hydrocarbon group and the fluorine-substituted hydrocarbon group is preferably 1 to 8. The polyimide-based resin of the present invention may contain more than one type of Y, and they may be the same or different from each other. Examples of Y include groups represented by the following Formula (20), Formula (21), Formula (22), Formula (23), Formula (24), Formula (25), Formula (26), Formula (27), Formula (28), and Formula (29); groups resulting from substitution of a hydrogen atom in the groups represented by Formulas (20) to (29) with a methyl group, a fluoro group, a chloro group, or a trifluoromethyl group; and tetravalent chain hydrocarbon groups having 6 or less carbon atoms.

[Chemical Formula 5]

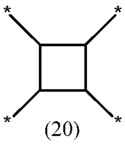 (20) 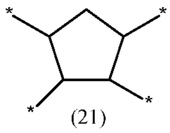 (21) 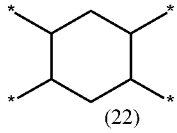 (22) 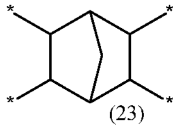 (23) 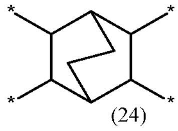 (24) 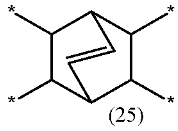 (25)

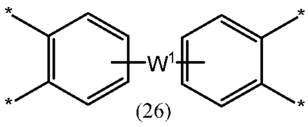 (26) 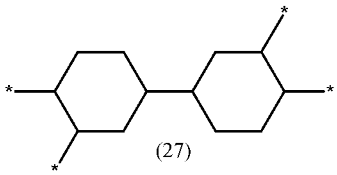 (27) 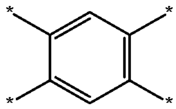 (28) 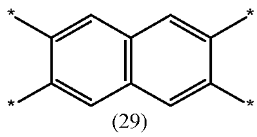 (29)

In Formulas (20) to (29),

* represents a bonding hand,
$W^1$ represents a single bond, -O-, $-CH_2-$, $-CH_2-CH_2-$, $-CH(CH_3)-$, - $C(CH_3)_2-$, $-C(CF_3)_2-$, -Ar-, $-SO_2-$, -CO-, -O-Ar-O-, -Ar-O-Ar-, $-Ar-CH_2-Ar-$, $-ArC(CH_3)_2-Ar-$, or $-Ar-SO_2-Ar-$. Ar represents an arylene group having 6 to 20 carbon atoms in which a hydrogen atom is optionally substituted with a fluorine atom, and examples thereof include a phenylene group.

Among the groups represented by Formula (20) to Formula (29), the group represented by Formula (26), Formula (28) or Formula (29) is preferable, and the group represented by Formula (26) is more preferable from the viewpoint of easily enhancing optical characteristics, heat resistance, tensile strength, and bending resistance. In addition, $W^1$ is each independently preferably a single bond, -O-, $-CH_2-$, $-CH_2-CH_2-$, - $CH(CH_3)-$, $-C(CH_3)_2-$, $-C(CF_3)_2-$, more preferably a single bond, -O-, $-CH_2-$, - $CH(CH_3)-$, $-C(CH_3)_2-$, or $-C(CF_3)_2-$, and still more preferably a single bond, - $C(CH_3)_2-$, or $-C(CF_3)_2-$ from the viewpoint of easily enhancing the optical characteristics, heat resistance, tensile strength, and bending resistance of the optical film.

In a preferred embodiment of the present invention, the constitutional unit represented by Formula (1) comprises, as Y, a structure represented by Formula (2):

[Chemical Formula 6]

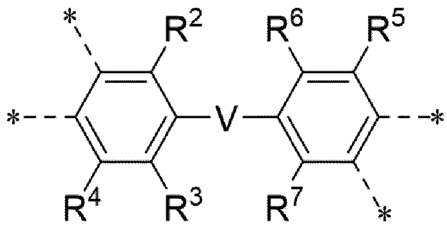 (2)

[wherein $R^2$ to $R^7$ each independently represent a hydrogen atom, an alkyl group having 1 to 6 carbon atoms, an alkoxy group having 1 to 6 carbon atoms, or an aryl group having 6 to 12 carbon atoms, the hydrogen atoms contained in $R^2$ to $R^7$ are each independently optionally substituted by a halogen atom, V represents a single bond, -O-, $-CH_2-$, $-CH_2-CH_2-$, $-CH(CH_3)-$, $-C(CH_3)_2-$, $-C(CF_3)_2-$, $-SO_2-$, -S-, -CO-, or $-N(R^8)-$, $R^8$ represents a hydrogen atom or a monovalent hydrocarbon group having 1 to 12 carbon atoms which is optionally substituted with a halogen atom, and * represents a bonding hand].

In such an embodiment, the optical film is likely to exhibit superior optical characteristics, heat resistance, tensile strength, and bending resistance. The constitutional unit represented by Formula (1) may contain one or more than one type of the structure represented by Formula (2) as Y.

In Formula (2), $R^2$, $R^3$, $R^4$, $R^5$, $R^6$, and $R^7$ each independently represent a hydrogen atom, an alkyl group having 1 to 6 carbon atoms, an alkoxy group having 1 to 6 carbon atoms, or an aryl group having 6 to 12 carbon atoms. Examples of the alkyl group having 1 to 6 carbon atoms, the alkoxy group having 1 to 6 carbon atoms, and the aryl group having 6 to 12 carbon atoms include the alkyl groups having 1 to 6 carbon atoms, alkoxy groups having 1 to 6 carbon atoms, and aryl groups having 6 to 12 carbon atoms disclosed above as examples. $R^2$ to $R^7$ each independently preferably represent a hydrogen atom or an alkyl group having 1 to 6 carbon atoms, and more preferably represent a

hydrogen atom or an alkyl group having 1 to 3 carbon atoms, wherein the hydrogen atoms contained in $R^2$ to $R^7$ may each independently be substituted with a halogen atom. Examples of the halogen atom include a fluorine atom, a chlorine atom, a bromine atom, and an iodine atom. V represents a single bond, -O-, $-CH_2-$, $-CH_2-CH_2-$, - $CH(CH_3)-$, $-C(CH_3)_2-$, $-C(CF_3)_2-$, $-SO_2-$, -S-, -CO-, or $-N(R^8)-$, and $R^8$ represents a hydrogen atom or a monovalent hydrocarbon group having 1 to 12 carbon atoms which is optionally substituted with a halogen atom. Examples of the monovalent hydrocarbon group having 1 to 12 carbon atoms which is optionally substituted with a halogen atom include those disclosed above as the examples of a monovalent hydrocarbon group having 1 to 12 carbon atoms which is optionally substituted with a halogen atom. Among them, V is preferably a single bond, -O-, $-CH_2-$, $-CH(CH_3)-$, $-C(CH_3)_2-$ or - $C(CF_3)_2-$, more preferably a single bond, $-C(CH_3)_2-$ or $-C(CF_3)_2-$, and still more preferably a single bond or $-C(CF_3)_2-$ from the viewpoint of easily enhancing the optical characteristics, heat resistance, tensile strength and bending resistance of the optical film.

In a preferred embodiment of the present invention, Formula (2) is represented by Formula (2')

[Chemical Formula 7]

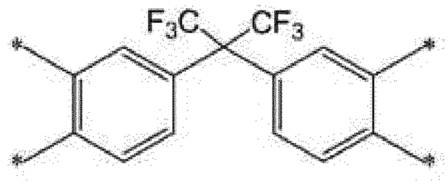

(2')

[wherein * represents a bonding hand].

In such an embodiment, the optical film is more likely to exhibit superior optical characteristics, heat resistance, tensile strength, and bending resistance. In addition, owing to the structure containing a fluorine element, the solubility of the resin in a solvent can be improved, the viscosity of the varnish can be controlled low, and the processing of the optical film can be facilitated.

In one embodiment of the present invention, when a structure represented by Formula (2) is contained as Y in Formula (1), the proportion of the constitutional unit in which Y in Formula (1) is represented by Formula (2) is preferably 30 mol% or more, more preferably 50 mol% or more, still more preferably 70 mol% or more, and particularly preferably 90 mol% or more, and is preferably 100 mol% or less, with respect to the total molar amount of the constitutional unit represented by Formula (1). When the proportion of the constitutional unit in which Y in Formula (1) is represented by Formula (2) is within the above range, the optical characteristics, heat resistance, tensile strength and bending resistance of the optical film can be more easily improved. The proportion of the constitutional unit in which Y in Formula (1) is represented by Formula (2) can be measured, for example, by using $^1$H-NMR, or can also be calculated from the charging ratio of the raw materials.

The polyimide-based resin of the present invention may contain a constitutional unit represented by Formula (30) and/or a constitutional unit represented by Formula (31) in addition to the constitutional unit represented by Formula (1).

[Chemical Formula 8]

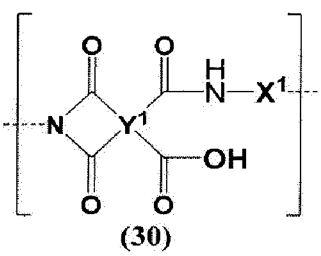

(30)

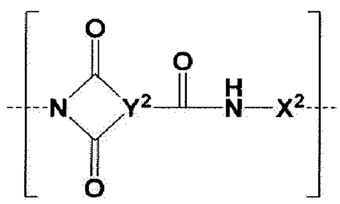

(31)

In Formula (30), $Y^1$ is a tetravalent organic group, and preferably an organic group in which a hydrogen atom in the organic group is optionally substituted with a hydrocarbon group or a fluorine-substituted hydrocarbon group. Examples of $Y^1$ include groups represented by Formula (20), Formula (21), Formula (22), Formula (23), Formula (24), Formula (25), Formula (26), Formula (27), Formula (28), and Formula (29), groups resulting from substitution of a hydrogen atom in the groups represented by Formulas (20) to (29) with a methyl group, a fluoro group, a chloro group,

or a trifluoromethyl group, and tetravalent chain hydrocarbon groups having 6 or less carbon atoms. In one embodiment of the present invention, the polyimide-based resin may contain more than one type of $Y^1$, and they may be the same or different from each other.

In Formula (31), $Y^2$ is a trivalent organic group, and preferably an organic group in which a hydrogen atom in the organic group is optionally substituted with a hydrocarbon group or a fluorine-substituted hydrocarbon group. Examples of $Y^2$ include groups resulting from the replacement by a hydrogen atom of any one of the bonding hands of the groups represented by the above Formula (20), Formula (21), Formula (22), Formula (23), Formula (24), Formula (25), Formula (26), Formula (27), Formula (28), and Formula (29), and trivalent chain hydrocarbon groups having 6 or less carbon atoms. In one embodiment of the present invention, the polyimide-based resin may contain more than one type of $Y^2$, and they may be the same or different from each other.

In Formula (30) and Formula (31), $X^1$ and $X^2$ each independently represent a divalent organic group, and preferably a divalent organic group having 2 to 40 carbon atoms. Examples of the divalent organic group include a divalent aromatic group and a divalent aliphatic group, and examples of the divalent aliphatic group include a divalent acyclic aliphatic group or a divalent cyclic aliphatic group. Examples of the divalent cyclic aliphatic group or the divalent aromatic group in $X^1$ and $X^2$ include groups represented by of the above Formula (10), Formula (11), Formula (12), Formula (13), Formula (14), Formula (15), Formula (16), Formula (17), and Formula (18); groups resulting from substitution of a hydrogen atom in the groups represented by Formulas (10) to (18) with a methyl group, a fluoro group, a chloro group, or a trifluoromethyl group; and chain hydrocarbon groups having 6 or less carbon atoms. Examples of the divalent acyclic aliphatic group include linear or branched alkylene groups having 2 to 10 carbon atoms such as an ethylene group, a trimethylene group, a tetramethylene group, a pentamethylene group, a hexamethylene group, a propylene group, a 1,2-butanediyl group, a 1,3-butanediyl group, a 2-methyl-1,2-propanediyl group, and a 2-methyl-1,3-propanediyl group.

In one embodiment of the present invention, the polyimide-based resin is composed of a constitutional unit represented by Formula (1), and optionally at least one constitutional unit selected from a constitutional unit represented by Formula (30) and a constitutional unit represented by Formula (31). In addition, from the viewpoint of easily enhancing the optical characteristics, heat resistance, tensile strength, and bending resistance of the optical film, the proportion of the constitutional unit represented by Formula (1) in the polyimide-based resin is preferably 80 mol% or more, more preferably 90 mol% or more, and still more preferably 95 mol% or more, based on a total molar amount of all the constitutional units contained in the polyimide-based resin, for example, the constitutional unit represented by Formula (1), and optionally at least one constitutional unit selected from the constitutional unit represented by Formula (30) and the constitutional unit represented by Formula (31). In the polyimide-based resin, the upper limit of the proportion of the constitutional unit represented by Formula (1) is 100 mol%. The proportion mentioned above can be measured, for example, by using $^1$H-NMR, or can also be calculated from the charging ratio of the raw materials. The polyimide-based resin in the present invention is preferably a polyimide resin from the viewpoint of easily enhancing the optical characteristics, heat resistance, tensile strength, and bending resistance of the optical film.

In a preferred embodiment of the present invention, the polyimide-based resin of the present invention may contain a halogen atom, preferably a fluorine atom, which can be introduced by, for example, the above-mentioned halogen atom-containing substituent. When the polyimide-based resin contains a halogen atom, preferably a fluorine atom, optical characteristics can be easily enhanced in addition to heat resistance, tensile strength, and bending resistance. Examples of the fluorine-containing substituent preferable for making the polyimide-based resin contain a fluorine atom include a fluoro group and a trifluoromethyl group.

The content of the halogen atom in the polyimide-based resin is preferably 1 to 40% by mass, more preferably 5 to 40% by mass, and still more preferably 5 to 30% by mass, based on the mass of the polyimide-based resin. When the content of the halogen atom is equal to or more than the above lower limit, the optical characteristics, heat resistance, tensile strength, and bending resistance of the optical film can be easily enhanced. When the content of the halogen atom is equal to or less than the above upper limit, the polyimide-based resin can be easily synthesized.

The weight average molecular weight (Mw) of the polyimide-based resin is preferably more than 250,000, more preferably 270,000 or more, still more preferably 300,000 or more, and particularly preferably 350,000 or more, and is preferably 800,000 or less, more preferably 700,000 or less, and still more preferably 600,000 or less. When the weight average molecular weight (Mw) is equal to or more than the above lower limit, bending resistance and tensile strength can be easily enhanced, and when the weight average molecular weight (Mw) is equal to or less than the above upper limit, the processability of the film can be easily improved. The weight average molecular weight (Mw) can be determined in terms of standard polystyrene by performing gel permeation chromatography (GPC) measurement, and can be calculated, for example, by the method described in EXAMPLES.

The imidization rate of the polyimide-based resin is preferably 90% or more, more preferably 93% or more, still more preferably 95% or more, yet still more preferably 97% or more, and particularly preferably 99% or more. From the viewpoint of easily enhancing the optical characteristics of the optical film, the imidization rate is preferably equal to or more than the above lower limit. The upper limit of the imidization rate is 100%. The imidization rate indicates the ratio

of the molar amount of the imide linkage in the polyimide-based resin to a value twice the molar amount of the constitutional unit derived from the tetracarboxylic acid compound in the polyimide-based resin. When the polyimide-based resin contains a tricarboxylic acid compound, the imidization rate indicates the ratio of the molar amount of the imide linkage in the polyimide-based resin to the sum total of a value twice the molar amount of the constitutional unit derived from the tetracarboxylic acid compound and the molar amount of the constitutional unit derived from the tricarboxylic acid compound in the polyimide-based resin. In addition, the imidization rate can be determined by an IR method, an NMR method, or the like, and can be determined, for example, by the method described in EXAMPLES.

In one embodiment of the present invention, the content of the polyimide-based resin contained in the optical film is preferably 40% by mass or more, more preferably 50% by mass or more, still more preferably 60% by mass, and particularly preferably 80% by mass or more, and is preferably 100% by mass or less with respect to the mass of the optical film (100% by mass). When the content of the polyimide-based resin contained in the optical film is within the above range, the optical characteristics, heat resistance, tensile strength, and bending resistance of the resulting optical film can be easily enhanced.

<Method for producing resin>

As the resin contained in the optical film of the present invention, a commercially available product may be used, or the resin may be produced by a conventional method. In one embodiment of the present invention, the resin is preferably a polyimide-based resin. The method for producing the polyimide-based resin is not particularly limited, but for example, the polyimide-based resin comprising the constitutional unit represented by Formula (1) can be produced by a method comprising a step of reacting a diamine compound with a tetracarboxylic acid compound to obtain a polyamic acid, and a step of imidizing the polyamic acid. In addition to the tetracarboxylic acid compound, a tricarboxylic acid compound may be reacted.

Examples of the tetracarboxylic acid compound to be used for the synthesis of the polyimide-based resin include aromatic tetracarboxylic acid compounds such as aromatic tetracarboxylic dianhydrides; and aliphatic tetracarboxylic acid compounds such as aliphatic tetracarboxylic dianhydrides. The tetracarboxylic acid compounds may be used singly or two or more of them may be used in combination. Besides the dianhydride, the tetracarboxylic acid compound may be a tetracarboxylic acid compound analogue such as an acid chloride compound.

Examples of the aromatic tetracarboxylic dianhydride include non-fused polycyclic aromatic tetracarboxylic dianhydrides, monocyclic aromatic tetracarboxylic dianhydrides, and fused polycyclic aromatic tetracarboxylic dianhydrides. Examples of the non-fused polycyclic aromatic tetracarboxylic dianhydride include 4,4'-oxydiphthalic dianhydride, 3,3',4,4'-benzophenonetetracarboxylic dianhydride, 2,2',3,3'-benzophenonetetracarboxylic dianhydride, 3,3',4,4'-biphenyltetracarboxylic dianhydride (sometimes referred to as BPDA), 2,2',3,3'-biphenyltetracarboxylic dianhydride, 3,3',4,4'-diphenylsulfonetetracarboxylic dianhydride, 2,2-bis(3,4-dicarboxyphenyl)propane dianhydride, 2,2-bis(2,3-dicarboxyphenyl)propane dianhydride, 2,2-bis(3,4-dicarboxyphenoxyphenyl)propane dianhydride, 4,4'-(hexafluoroisopropylidene)diphthalic dianhydride (sometimes referred to as 6FDA), 1,2-bis(2,3-dicarboxyphenyl)ethane dianhydride, 1,1-bis(2,3-dicarboxyphenyl)ethane dianhydride, 1,2-bis(3,4-dicarboxyphenyl)ethane dianhydride, 1,1-bis(3,4-dicarboxyphenyl)ethane dianhydride, bis(3,4-dicarboxyphenyl)methane dianhydride, bis(2,3-dicarboxyphenyl)methane dianhydride, 4,4'-(p-phenylenedioxy)diphthalic dianhydride, and 4,4'-(m-phenylenedioxy)diphthalic dianhydride. Examples of the monocyclic aromatic tetracarboxylic dianhydride include 1,2,4,5-benzenetetracarboxylic dianhydride, and examples of the fused polycyclic aromatic tetracarboxylic dianhydride include 2,3,6,7-naphthalenetetracarboxylic dianhydride. These may be used singly or two or more of them may be used in combination.

Examples of the aliphatic tetracarboxylic dianhydride include cyclic or acyclic aliphatic tetracarboxylic dianhydrides. The cycloaliphatic tetracarboxylic dianhydride is a tetracarboxylic dianhydride having an alicyclic hydrocarbon structure, and examples thereof include cycloalkanetetracarboxylic dianhydrides such as 1,2,4,5-cyclohexanetetracarboxylic dianhydride, 1,2,3,4-cyclobutanetetracarboxylic dianhydride, and 1,2,3,4-cyclopentanetetracarboxylic dianhydride, bicyclo[2.2.2]oct-7-ene-2,3,5,6-tetracarboxylic dianhydride, dicyclohexyl-3,3',4,4'-tetracarboxylic dianhydride, and regioisomers thereof. These may be used singly or two or more of them may be used in combination. Examples of the acyclic aliphatic tetracarboxylic dianhydride include 1,2,3,4-butanetetracarboxylic dianhydride and 1,2,3,4-pentanetetracarboxylic dianhydride, and these may be used singly or two or more of them may be used in combination. A cyclic aliphatic tetracarboxylic dianhydride and an acyclic aliphatic tetracarboxylic dianhydride may be used in combination.

Among the tetracarboxylic dianhydrides, 4,4'-oxydiphthalic dianhydride, 3,3',4,4'-benzophenonetetracarboxylic dianhydride, 3,3',4,4'-biphenyltetracarboxylic dianhydride, 2,2',3,3'-biphenyltetracarboxylic dianhydride, 3,3',4,4'-diphenylsulfonetracarboxylic dianhydride, 2,2-bis(3,4-dicarboxyphenyl)propane dianhydride, 4,4'-(hexafluoroisopropylidene)diphthalic dianhydride, and mixtures thereof are preferred, and 4,4'-(hexafluoroisopropylidene)diphthalic dianhydride (6FDA) is more preferred from the viewpoint of easily improving the optical characteristics, heat resistance, tensile strength, and bending resistance of the optical film.

Examples of the diamine compound to be used for the synthesis of the polyimide-based resin include aliphatic

diamines, aromatic diamines, and mixtures thereof. In the present embodiment, the "aromatic diamine" represents a diamine having an aromatic ring, and may contain an aliphatic group or other substituents as a part of the structure thereof. The aromatic ring may be either a single ring or a fused ring, and examples thereof include, but are not limited to, a benzene ring, a naphthalene ring, an anthracene ring, and a fluorene ring. Among them, a benzene ring is preferable. The "aliphatic diamine" represents a diamine having an aliphatic group, and may contain other substituents as a part of the structure thereof, but does not have any aromatic ring.

Examples of the aliphatic diamine include acyclic aliphatic diamines and cyclic aliphatic diamines. Examples of the acyclic aliphatic diamine include linear or branched diaminoalkanes having 2 to 10 carbon atoms such as 1,2-diaminoethane, 1,3-diaminopropane, 1,4-diaminobutane, 1,5-diaminopentane, 1,6-diaminohexane, 1,2-diaminopropane, 1,2-diaminobutane, 1,3-diaminobutane, 2-methyl-1,2-diaminopropane, and 2-methyl-1,3-diaminopropane. Examples of the cyclic aliphatic diamine include 1,3-bis(aminomethyl)cyclohexane, 1,4-bis(aminomethyl)cyclohexane, norbornanediamine, and 4,4'-diaminodicyclohexylmethane. These may be used singly or two or more of them may be used in combination.

Examples of the aromatic diamine include aromatic diamines having one aromatic ring such as p-phenylenediamine, m-phenylenediamine, 2,4-toluenediamine, m-xylylenediamine, p-xylylenediamine, 1,5-diaminonaphthalene, and 2,6-diaminonaphthalene, and aromatic diamines having two or more aromatic rings such as 4,4'-diaminodiphenylmethane, 4,4'-diaminodiphenylpropane, 4,4'-diaminodiphenyl ether, 3,4'-diaminodiphenyl ether, 3,3'-diaminodiphenyl ether, 4,4'-diaminodiphenylsulfone, 3,4'-diaminodiphenylsulfone, 3,3'-diaminodiphenylsulfone, 1,4-bis(4-aminophenoxy)benzene, 1,3-bis(4-aminophenoxy)benzene, bis[4-(4-aminophenoxy)phenyl]sulfone, bis[4-(3-aminophenoxy)phenyl]sulfone, 2,2-bis[4-(4-aminophenoxy)phenyl]propane, 2,2-bis[4-(3-aminophenoxy)phenyl]propane, 2,2'-dimethylbenzidine, 2,2'-bis(trifluoromethyl)-4,4'-diaminodiphenyl (sometimes referred to as TFMB), 4,4'-(hexafluoropropylidene)dianiline, 4,4'-bis(4-aminophenoxy)biphenyl, 9,9-bis(4-aminophenyl)fluorene, 9,9-bis(4-amino-3-methylphenyl)fluorene, 9,9-bis(4-amino-3-chlorophenyl)fluorene, and 9,9-bis(4-amino-3-fluorophenyl)fluorene. These may be used singly or two or more of them may be used in combination.

Among the above diamine compounds, diaminoalkanes having 2 to 10 carbon atoms such as 1,2-diaminoethane, 1,3-diaminopropane, 1,4-diaminobutane (sometimes referred to as 1,4-DAB), 1,5-diaminopentane, 1,6-diaminohexane, 1,2-diaminopropane, 1,2-diaminobutane, 1,3-diaminobutane, 2-methyl-1,2-diaminopropane, and 2-methyl-1,3-diaminopropane are preferable, diaminoalkanes having 2 to 6 carbon atoms are more preferable, and 1,4-diaminobutane is still more preferable from the viewpoint of easily enhancing the optical characteristics, heat resistance, tensile strength, and bending resistance of the optical film.

The polyimide-based resin may be one obtained by further reacting, in addition to the tetracarboxylic acid compound to be used for the resin synthesis, other tetracarboxylic acids and tricarboxylic acids and anhydrides and derivatives thereof as long as physical properties of the optical film are not impaired.

Examples of such other tetracarboxylic acids include a water adduct of an anhydride of the tetracarboxylic acid compound described above.

Examples of the tricarboxylic acid compound include aromatic tricarboxylic acids, aliphatic tricarboxylic acids, and analogous acid chloride compounds and acid anhydrides thereof, and two or more of them may be used in combination. Examples thereof include an anhydride of 1,2,4-benzenetricarboxylic acid; 2,3,6-naphthalenetricarboxylic acid-2,3 anhydride; and compounds in which phthalic anhydride and benzoic acid are linked by a single bond, -O-, $-CH_2-$, $-C(CH_3)_2-$, $-C(CF_3)_2-$, $-SO_2-$, or a phenylene group.

In the production of the polyimide-based resin, the amounts of the diamine compound, the tetracarboxylic acid compound, and the tricarboxylic acid compound used can be appropriately chosen according to the ratio of each constitutional unit of the desired resin.

In a preferred embodiment of the present invention, the amount of the diamine compound used is preferably 0.94 mol or more, more preferably 0.96 mol or more, still more preferably 0.98 mol or more, and particularly preferably 0.99 mol or more, and is preferably 1.20 mol or less, more preferably 1.10 mol or less, still more preferably 1.05 mol or less, and particularly preferably 1.02 mol or less, with respect to 1 mol of the tetracarboxylic acid compound. When the amount of the diamine compound used with respect to the tetracarboxylic acid compound is within the above range, the optical characteristics, heat resistance, tensile strength, and bending resistance of the resulting optical film can be easily enhanced.

The reaction temperature of the diamine compound and the tetracarboxylic acid compound is not particularly limited, and may be, for example, 5 to 200°C, and the reaction time is not particularly limited, and may be, for example, about 30 minutes to 72 hours. In a preferred embodiment of the present invention, the reaction temperature is preferably 5 to 200°C, more preferably 50 to 190°C, and further preferably 100 to 180°C, and the reaction time is preferably 3 to 24 hours, and more preferably 5 to 20 hours. With such a reaction temperature and reaction time, the Tg and optical transmittance of the resulting optical film can be easily adjusted to within the above ranges, and the optical characteristics, heat resistance, tensile strength, and bending resistance of the optical film can be easily enhanced. The Mw of the polyimide-based resin can be adjusted by appropriately changing reaction conditions such as a reaction time and a

reaction temperature; the types and amounts of the diamine compound, the tetracarboxylic acid compound, the catalyst, and the solvent used; the composition of a good solvent and a poor solvent in a precipitation operation; the composition of a washing solution; and the like.

The reaction between the diamine compound and the tetracarboxylic acid compound is preferably performed in a solvent. The solvent is not particularly limited as long as it does not affect the reaction, and examples thereof include alcohol-based solvents such as water, methanol, ethanol, ethylene glycol, isopropyl alcohol, propylene glycol, ethylene glycol methyl ether, ethylene glycol butyl ether, 1-methoxy-2-propanol, 2-butoxyethanol, and propylene glycol monomethyl ether; phenol-based solvents such as phenol and cresol; ester-based solvents such as ethyl acetate, butyl acetate, ethylene glycol methyl ether acetate, γ-butyrolactone, γ-valerolactone, propylene glycol methyl ether acetate, and ethyl lactate; ketone-based solvents such as acetone, methyl ethyl ketone, cyclopentanone, cyclohexanone, 2-heptanone, and methyl isobutyl ketone; aliphatic hydrocarbon solvents such as pentane, hexane, and heptane; alicyclic hydrocarbon solvents such as ethylcyclohexane; aromatic hydrocarbon solvents such as toluene and xylene; nitrile-based solvents such as acetonitrile; ether-based solvents such as tetrahydrofuran and dimethoxyethane; chlorine-containing solvents such as chloroform and chlorobenzene; amide-based solvents such as N,N-dimethylacetamide and N,N-dimethylformamide; sulfur-containing solvents such as dimethyl sulfone, dimethyl sulfoxide, and sulfolane; carbonate-based solvents such as ethylene carbonate and propylene carbonate; and combinations thereof. Among them, phenol-based solvents and amide-based solvents can be suitably used from the viewpoint of solubility.

In a preferred embodiment of the present invention, the solvent to be used in the reaction is preferably a solvent strictly dehydrated to a water content of 700 ppm or less. When such a solvent is used, the Tg and optical transmittance of the resulting optical film can be easily adjusted to within the above ranges, and the optical characteristics, heat resistance, tensile strength, and bending resistance can be easily enhanced.

The reaction between the diamine compound and the tetracarboxylic acid compound may be carried out under an inert atmosphere (nitrogen atmosphere, argon atmosphere, etc.) or under reduced pressure, as necessary, and is preferably carried out under an inert atmosphere (nitrogen atmosphere, argon atmosphere, etc.) while stirring in a strictly controlled dehydrated solvent. Under such conditions, the Tg and optical transmittance of the resulting optical film can be easily adjusted to within the above ranges, and the optical characteristics, heat resistance, tensile strength, and bending resistance can be easily enhanced.

In the imidization step, imidization may be carried out using an imidization catalyst, imidization may be carried out by heating, or a combination thereof may be employed. Examples of the imidization catalyst to be used in the imidization step include aliphatic amines such as tripropylamine, dibutylpropylamine, and ethyldibutylamine; alicyclic amines (monocyclic) such as N-ethylpiperidine, N-propylpiperidine, N-butylpyrrolidine, N-butylpiperidine, and N-propylhexahydroazepine; alicyclic amines (polycyclic) such as azabicyclo[2.2.1]heptane, azabicyclo[3.2.1]octane, azabicyclo[2.2.2]octane, and azabicyclo[3.2.2]nonane; and aromatic amines such as pyridine, 2-methylpyridine (2-picoline), 3-methylpyridine (3-picoline), 4-methylpyridine (4-picoline), 2-ethylpyridine, 3-ethylpyridine, 4-ethylpyridine, 2,4-dimethylpyridine, 2,4,6-trimethylpyridine, 3,4-cyclopentenopyridine, 5,6,7,8-tetrahydroisoquinoline, and isoquinoline. From the viewpoint of easily accelerating the imidization reaction, it is preferable to use an acid anhydride together with the imidization catalyst. Examples of the acid anhydride include common acid anhydrides used for imidization reactions, and specific examples thereof include aliphatic acid anhydrides such as acetic anhydride, propionic anhydride, and butyric anhydride, and anhydrides of aromatic acids such as phthalic acid.

In one embodiment of the present invention, in the case of carrying out imidization, the reaction temperature is preferably 40°C or higher, more preferably 60°C or higher, and still more preferably 80°C or higher, and is preferably 190°C or lower, and more preferably 170°C or lower. The reaction time of the imidization step is preferably 30 minutes to 24 hours, and more preferably 1 to 12 hours. When the reaction temperature and the reaction time are within the above ranges, the optical characteristics, heat resistance, tensile strength, and bending resistance of the resulting optical film can be easily enhanced.

The polyimide-based resin may be isolated (separated and purified) by a conventional method, for example, a separation means such as filtration, concentration, extraction, crystallization, recrystallization, or column chromatography, or a separation means combining these. In a preferred embodiment, the polyimide-based resin can be isolated by adding a large amount of an alcohol such as methanol to a reaction solution containing the resin to precipitate the resin, and then performing concentration, filtration, drying, or the like.

<Additives>

The optical film of the present invention may further contain an ultraviolet absorber. In the present invention, even when an ultraviolet absorber is contained, an optical film superior in heat resistance, preferably heat resistance, tensile strength and bending resistance can be formed by adjusting Tg to within the above range. Therefore, an optical film capable of exhibiting a UV-blocking property and heat resistance, preferably a UV-blocking property, heat resistance, tensile strength, and bending resistance, in a well-balanced manner can be formed by using the ultraviolet absorber to

reduce the light absorbability in the ultraviolet region. Examples of the ultraviolet absorber include benzotriazole derivatives (benzotriazole-based ultraviolet absorbers), triazine derivatives (triazine-based ultraviolet absorbers) such as 1,3,5-triphenyltriazine derivatives, benzophenone derivatives (benzophenone-based ultraviolet absorbers), and salicylate derivatives (salicylate-based ultraviolet absorbers), and at least one selected from the group consisting of these can be used. From the viewpoint of exhibiting ultraviolet absorbability in the vicinity of 300 to 400 nm, preferably 320 to 360 nm, and being capable of improving the UV-blocking property of the optical film without reducing the transmittance in the visible region, it is preferable to use at least one selected from the group consisting of benzotriazole-based ultraviolet absorbers and triazine-based ultraviolet absorbers, and benzotriazole-based ultraviolet absorbers are more preferable.

Examples of the benzotriazole-based ultraviolet absorber include a compound represented by Formula (I), trade name: Sumisorb (registered trademark) 250 (2-[2-hydroxy-3-(3,4,5,6-tetrahydrophthalimide-methodiyl)-5-methylphenyl]benzotriazole) manufactured by Sumitomo Chemical Co., Ltd., trade name: Tinuvin (registered trademark) 360 (2,2'-methylenebis[6-(2H-benzotriazol-2-yl)-4-tert-octylphenol]) and Tinuvin 213 (a reaction product of methyl 3-[3-(2H-benzotriazol-2-yl)-5-tert-butyl-4-hydroxyphenyl]propionate and PEG 300) manufactured by BASF Japan Ltd. These may be used singly or two or more of them may be used in combination. Examples of the compound represented by Formula (I) include trade name: Sumisorb 200 (2-(2-hydroxy-5-methylphenyl)benzotriazole), Sumisorb 300 (2-(3-tert-butyl-2-hydroxy-5-methylphenyl)-5-chlorobenzotriazole), Sumisorb 340 (2-(2-hydroxy-5-tert-octylphenyl)benzotriazole), and Sumisorb 350 (2-(2-hydroxy-3,5-di-tert-pentylphenyl)benzotriazole) manufactured by Sumitomo Chemical Co., Ltd., trade name: Tinuvin 327 (2-(2'-hydroxy-3',5'-di-tert-butylphenyl)-5-chlorobenzotriazole), Tinuvin 571 (2-(2H-benzotriazo-2-yl)-6-dodecyl-4-methyl-phenol), and Tinuvin 234 (2-(2H-benzotriazol-2-yl)-4,6-bis(1-methyl-1-phenylethyl)phenol) manufactured by BASF Japan Ltd., and product name: ADK STAB (registered trademark) LA-31 (2,2'-methylenebis[6-(2H-benzotriazol-2-yl)-4-(1,1,3,3-tetramethylbutyl)phenol]) manufactured by ADEKA Corporation. The ultraviolet absorber is preferably a compound represented by Formula (I) and Tinuvin 213 (a reaction product of methyl 3-[3-(2H-benzotriazol-2-yl)-5-tert-butyl-4-hydroxyphenyl]propionate and PEG 300, more preferably, trade names: Sumisorb 200 (2-(2-hydroxy-5-methylphenyl)benzotriazole), Sumisorb 300 (2-(3-tert-butyl-2-hydroxy-5-methylphenyl)-5-chlorobenzotriazole), Sumisorb 340 (2-(2-hydroxy-5-tert-octylphenyl)benzotriazole), Sumisorb 350 (2-(2-hydroxy-3,5-di-tert-pentylphenyl)benzotriazole) manufactured by Sumitomo Chemical Co., Ltd., product name: ADK STAB LA-31 (2,2'-methylenebis[6-(2H-benzotriazol-2-yl)-4-(1,1,3,3-tetramethylbutyl)phenol]) manufactured by ADEKA Corporation, and trade name: Tinuvin 327 (2-(2'-hydroxy-3',5'-di-tert-butylphenyl)-5-chlorobenzotriazole) and Tinuvin 571 (2-(2H-benzotriazo-2-yl)-6-dodecyl-4-methyl-phenol) manufactured by BASF Japan Ltd., and most preferably trade names: Sumisorb 340 (2-(2-hydroxy-5-tert-octylphenyl)benzotriazole) and Sumisorb 350 (2-(2-hydroxy-3,5-di-tert-pentylphenyl)benzotriazole) manufactured by Sumitomo Chemical Co., Ltd., and product name: ADK STAB LA -31 (2,2'-methylenebis[6-(2H-benzotriazol-2-yl)-4-(1,1,3,3-tetramethylbutyl)phenol]) manufactured by ADEKA Corporation.

[Chemical Formula 9]

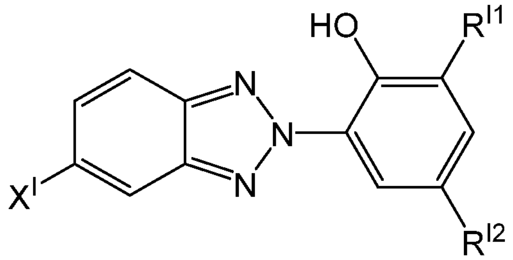

(I)

In Formula (I), $X^I$ is a hydrogen atom, a fluorine atom, a chlorine atom, an alkyl group having 1 to 5 carbon atoms, or an alkoxy group having 1 to 5 carbon atoms, $R^{I1}$ and $R^{I2}$ are each independently a hydrogen atom or a hydrocarbon group having 1 to 20 carbon atoms, and at least one of $R^{I1}$ and $R^{I2}$ is a hydrocarbon group having 1 to 20 carbon atoms.

Examples of the alkyl group having 1 to 5 carbon atoms in $X^I$ include a methyl group, an ethyl group, an n-propyl group, an isopropyl group, an n-butyl group, a sec-butyl group, a tert-butyl group, an n-pentyl group, a 2-methylbutyl group, a 3-methylbutyl group, and a 2-ethyl-propyl group.

Examples of the alkoxy group having 1 to 5 carbon atoms in $X^I$ include a methoxy group, an ethoxy group, an n-propoxy group, an isopropoxy group, an n-butoxy group, a sec-butoxy group, a tert-butoxy group, an n-pentyloxy group, a 2-methyl-butoxy group, a 3-methylbutoxy group, and a 2-ethyl-propoxy group.

$X^I$ is preferably a hydrogen atom, a fluorine atom, a chlorine atom, or a methyl group, and more preferably a hydrogen atom, a fluorine atom, or a chlorine atom.

$R^{I1}$ and $R^{I2}$ are each independently a hydrogen atom or a hydrocarbon group having 1 to 20 carbon atoms, and

at least one of $R^{I1}$ and $R^{I2}$ is a hydrocarbon group. When $R^{I1}$ and $R^{I2}$ are each a hydrocarbon group, they are preferably a hydrocarbon group having 1 to 12 carbon atoms, and more preferably a hydrocarbon group having 1 to 8 carbon atoms. Specific examples thereof include a methyl group, a tert-butyl group, a tert-pentyl group, and a tert-octyl group.

As the ultraviolet absorber according to another preferred embodiment, a triazine-based ultraviolet absorber is used in an optical film containing a polyimide-based resin. Examples of the triazine-based ultraviolet absorber include a compound represented by the following Formula (II). Specific examples thereof include product name: ADK STAB LA-46 (2-(4,6-diphenyl-1,3,5-triazin-2-yl)-5-[2-(2-ethylhexanoyloxy)ethoxy]phenol) of ADEKA Corporation, trade name: Tinuvin 400 (2-[4-[2-hydroxy-3-tridecyloxypropyl]oxy]-2-hydroxyphenyl] -4,6-bis(2,4-dimethylphenyl)-1,3,5-triazine), 2-[4-[2-hydroxy-3-didecyloxypropyl]oxy]-2-hydroxyphenyl]-4,6-bis(2,4-dimethylphenyl)-1,3,5-triazine), Tinuvin 405 (2-[4(2-hydroxy-3-(2'-ethyl)hexyl)oxy]-2-hydroxyphenyl]-4,6-bis(2,4-dimethylphenyl)-1,3,5-triazine), Tinuvin 460 (2,4-bis(2-hydroxy-4-butyloxyphenyl)-6-(2,4-bis-butyloxyphenyl)-1,3,5-triazine), and Tinuvin 479 (hydroxyphenyltriazine-based ultraviolet absorbent) of BASF Japan Ltd., and product name: KEMISORB (registered trademark) 102 (2-[4,6-bis(2,4-dimethylphenyl)-1,3,5-triazin-2-yl]-5-(n-octyloxy)phenol) of Chemipro Kasei Kaisha, Ltd. These can be used singly or two or more of them may be used in combination. The compound represented by Formula (II) is preferably ADK STAB LA-46 (2-(4,6-diphenyl-1,3,5-triazin-2-yl)-5-[2-(2-ethylhexanoyloxy)ethoxy]phenol).

[Chemical Formula 10]

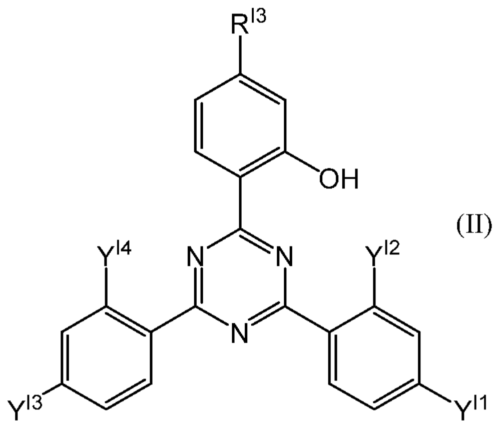

(II)

In Formula (II), $Y^{I1}$ to $Y^{I4}$ each independently represent a hydrogen atom, a fluorine atom, a chlorine atom, a hydroxy group, an alkyl group having 1 to 20 carbon atoms, or an alkoxy group having 1 to 20 carbon atoms, preferably a hydrogen atom, an alkyl group having 1 to 12 carbon atoms, or an alkoxy group having 1 to 12 carbon atoms, and more preferably a hydrogen atom.

In Formula (II), $R^{I3}$ is a hydrogen atom, a hydrocarbon group having 1 to 20 carbon atoms, an alkoxy group having 1 to 20 carbon atoms containing one oxygen atom, or an alkoxy group having 1 to 4 carbon atoms substituted with an alkylketoxy group having 1 to 12 carbon atoms, preferably an alkoxy group having 1 to 12 carbon atoms containing one oxygen atom or an alkoxy group having 2 to 4 carbon atoms substituted with an alkylketoxy group having 8 to 12 carbon atoms, and more preferably an alkoxy group having 2 to 4 carbon atoms substituted with an alkylketoxy group having 8 to 12 carbon atoms.

Examples of the alkyl group having 1 to 20 carbon atoms as $Y^{I1}$ to $Y^{I4}$ include a methyl group, an ethyl group, an n-propyl group, an isopropyl group, an n-butyl group, a sec-butyl group, a tert-butyl group, an n-pentyl group, an n-hexyl group, an n-heptyl group, an n-octyl group, an n-nonyl group, an n-decyl group, an n-dodecyl group, and an n-undecyl group. Examples of the alkoxy group having 1 to 20 carbon atoms include a methoxy group, an ethoxy group, an n-propoxy group, an isopropoxy group, an n-butoxy group, a sec-butoxy group, a tert-butoxy group, an n-pentyloxy group, an n-hexyloxy group, an n-heptyloxy group, an n-octyloxy group, a n-nonyloxy group, an n-decyloxy group, an n-dodecyloxy group, and an n-undecyloxy group.

The ultraviolet absorber preferably has light absorption of 300 to 400 nm, more preferably has light absorption of 320 to 360 nm, and still more preferably has light absorption around 350 nm.

When the optical film of the present invention contains an ultraviolet absorber, the content of the ultraviolet absorber is preferably 0.1 parts by mass or more, more preferably 0.5 parts by mass or more, still more preferably 0.8 parts by mass or more, and particularly preferably 1 part by mass or more, and is preferably 10 parts by mass or less, more preferably 8 parts by mass or less, and still more preferably 5 parts by mass or less, with respect to 100 parts by mass of the polyimide-based resin. When the content of the ultraviolet absorber is equal to or more than the above lower

limit, the UV-blocking property of the optical film can be easily improved, and when the content of the ultraviolet absorber is equal to or less than the above upper limit, the transparency, heat resistance, tensile strength, and bending resistance of the optical film can be easily enhanced.

The optical film of the present invention may further contain additives other than the ultraviolet absorber. Examples of other additives include antioxidants, mold release agents, stabilizers, brewing agents, flame retardants, pH regulators, silica dispersants, lubricants, thickeners, and leveling agents. When other additives are contained, the content thereof may be preferably 0.001 to 20% by mass, more preferably 0.01 to 15% by mass, and still more preferably 0.1 to 10% by mass based on the mass of the optical film. The optical film of the present invention may further contain a filler or the like. The content thereof is preferably 1 to 30% by mass based on the mass of the optical film.

The application of the optical film of the present invention is not particularly limited, and the optical film may be used for various applications, for example, a substrate for a touch sensor, a material for a flexible display device, a protective film, a film for bezel printing, a semiconductor application, a speaker diaphragm, and an IR cut filter. The optical film of the present invention may be a single layer or a laminate as described above, and the optical film of the present invention may be used as it is or may be used as a laminate with another film. When the optical film is a laminate, it is referred to as an optical film including all the layers laminated on one side or both sides of the optical film.

When the optical film of the present invention is a laminate, it is preferable to have one or more functional layers on at least one side of the optical film. Examples of the functional layer include a hard coat layer, a primer layer, a gas barrier layer, an ultraviolet absorbing layer, a pressure-sensitive adhesive layer, a hue adjusting layer, and a refractive index adjusting layer. The functional layers may be used singly or two or more of them may be used in combination.

In one embodiment of the present invention, the optical film may have a protective film on at least one side (one side or both sides). For example, when the functional layer is provided on one side of the optical film, the protective film may be laminated on the surface on the optical film side or the surface on the functional layer side, and may be laminated on both the optical film side and the functional layer side. When the optical film has functional layers on both sides, the protective film may be laminated on the surface on one functional layer side or on the surfaces on both functional layer sides. The protective film is a film for temporarily protecting the surface of the optical film or the functional layer, and is not particularly limited as long as it is a peelable film capable of protecting the surface of the optical film or the functional layer. Examples of the protective film include films of polyester resins such as polyethylene terephthalate, polybutylene terephthalate, and polyethylene naphthalate; polyolefin resin films such as polyethylene and polypropylene films, and acrylic resin films, and the protective film is preferably selected from the group consisting of polyolefin resin films, polyethylene terephthalate resin films, and acrylic resin films. When the optical film has two protective films, the protective films may be the same or different.

The thickness of the protective film is not particularly limited, but is usually 10 to 120 pm, preferably 15 to 110 pm, and more preferably 20 to 100 pm. When the optical film has two protective films, the thickness of each protective film may be the same or different.

[Method for producing optical film]

The optical film of the present invention can be produced, for example without any particular limitations, by a method comprising the following steps:

(a) a step of preparing a liquid (sometimes referred to as varnish) comprising the polyimide-based resin described above (varnish preparation step);
(b) a step of applying the varnish to a substrate to form a coating film (application step); and
(c) a step of drying the applied liquid (the coating film) to form an optical film (optical film formation step).

In the varnish preparation step, a varnish is prepared by dissolving the polyimide-based resin in a solvent, and, as necessary, adding the additives described above, followed by stirring and mixing.

The solvent to be used for the preparation of the varnish is not particularly limited as long as it can dissolve the resin. Examples of the solvent include amide-based solvents such as N,N-dimethylacetamide (DMAc) and N,N-dimethylformamide (DMF); lactone-based solvents such as γ-butyrolactone (GBL) and γ-valerolactone; ketone-based solvents such as acetone, methyl ethyl ketone, cyclopentanone, cyclohexanone, 2-heptanone, and methyl isobutyl ketone; sulfur-containing solvents such as dimethyl sulfone, dimethyl sulfoxide, and sulfolane; carbonate-based solvents such as ethylene carbonate and propylene carbonate; and combinations thereof. Among them, amide solvents, lactone solvents, or ketone solvents are preferable from the viewpoint of easily enhancing the optical characteristics, heat resistance, tensile strength, and bending resistance of the optical film. These solvents may be used singly or two or more of them may be used in combination. The varnish may contain water, an alcohol solvent, an acyclic ester solvent, an ether solvent, or the like.

The solid content concentration of the varnish is preferably 1 to 30% by mass, more preferably 5 to 25% by

mass, and still more preferably 10 to 20% by mass. In the present description, the solid content of the varnish refers to the total amount of the components resulting from excluding the solvent from the varnish. The viscosity of the varnish is preferably 5 to 100 Pa ·s, and more preferably 10 to 50 Pa ·s. When the viscosity of the varnish is within the above range, the optical film can be easily made uniform, and an optical film superior in optical characteristics, tensile strength, heat resistance, and bending resistance is likely to be obtained. The viscosity of a varnish can be measured using a viscometer, and can be measured by, for example, the method described in EXAMPLES.

In the application step, a varnish is applied to a substrate by a publicly-known coating method to form a coating film. Examples of the publicly-known coating method include a wire bar coating method, a roll coating method such as reverse coating or gravure coating, a die coating method, a comma coating method, a lip coating method, a spin coating method, a screen coating method, a fountain coating method, a dipping method, a spraying method, and a casting film forming method.

In the optical film formation step, the coating film is dried and peeled off from the substrate, whereby an optical film can be formed. After the peeling, a drying step of further drying the optical film may be carried out. The coating film can be dried usually at a temperature of 50 to 350°C, preferably 50 to 220°C. In a preferred embodiment of the present invention, it is preferable to carry out the drying stepwise. A varnish containing a high molecular weight resin tends to have a high viscosity, and it is generally difficult to obtain a uniform film, so that optical characteristics (especially, transparency) and Tg may be lowered. Therefore, by carrying out stepwise the drying, the varnish containing the high molecular weight resin can be uniformly dried, and an optical film having superior optical characteristics (especially, transparency) and a high Tg and being superior in heat resistance, tensile strength, and bending resistance can be obtained. In a more preferred embodiment of the present invention, heating can be carried out at a relatively low temperature of 100 to 170°C, followed by heating at 185 to 220°C. The drying (or heating time) is preferably 5 minutes to 5 hours, and more preferably 10 minutes to 1 hour. By heating from a low temperature to a high temperature stepwise in such a range, the Tg can be easily adjusted to within the above range, and an optical film further superior in heat resistance, tensile strength, and bending resistance as well as further superior optical characteristics (for example, high optical transmittance at 500 nm) can be easily obtained. The coating film may be dried under an inert atmosphere condition, as necessary. When the optical film is dried under vacuum conditions, minute bubbles may be generated and remain in the film, which causes a decrease in transparency, and therefore it is preferable to dry the optical film under atmospheric pressure.

Examples of the substrate include a glass substrate, a PET film, a PEN film, and a film of another polyimide-based resin or a polyamide resin. Among them, glass, a PET film, and a PEN film are preferable from the viewpoint of superior heat resistance, and a glass substrate or a PET film is more preferable from the viewpoint of adhesion to the optical film and cost.

The optical film of the present invention can be suitably used as a substrate for a display device, especially a touch sensor. Examples of the display device include a television, a smartphone, a mobile phone, a car navigation system, a tablet PC, a portable game machine, an electronic paper, an indicator, a bulletin board, a clock, and a wearable device such as a smart watch.

[Flexible display device]

The present invention encompasses a flexible display device comprising the optical film of the present invention. Examples of the flexible display device include a display device having flexible characteristics, for example, a television, a smartphone, a mobile phone, and a smart watch.

The flexible display device is a display device that is used with operations such as repeatedly folding the display device or repeatedly winding the display device, and examples thereof include a rollable display and a foldable display. The rollable display is a display device in which a display portion has been wound in a roll form and which is used in a state where the display portion is unwound to form a flat surface or a curved surface, and is a display device with which an operation such as winding into a roll form is carried out each time of use. The foldable display is a display device in which a display portion has been folded and which is used in a state where the display portion is opened to form a flat surface or a curved surface, and is a display device with which an operation such as folding is carried out each time of use. The specific configuration of the flexible display device is not particularly limited, and examples thereof include a configuration comprising a laminate for a flexible display device and an organic EL display panel. Such a flexible display device of the present invention preferably further comprises a polarizer and/or a touch sensor. Conventionally used polarizers or touch sensors can be used, and these may be contained in the laminate for a flexible display device. Examples of the polarizer include a circular polarizer, and examples of the touch sensor include various types such as a resistive film type, a surface acoustic wave type, an infrared type, an electromagnetic induction type, and an electrical capacitance type. The substrate for a touch sensor (or the film for a touch sensor) to be used in such a flexible display device is required to have bending resistance. Since the optical film of the present invention is superior in bending resistance, the optical film can be suitably used as the substrate for a touch sensor (or the film for a touch sensor).

In one embodiment of the present invention, the laminate for a flexible display device preferably further comprises a window film on the viewing side, and for example, a window film, a polarizer, a touch sensor, or a window film, a touch sensor, and a polarizer may be laminated in this order from the viewing side. These members may be laminated using an adhesive or a pressure-sensitive adhesive, and may include other members other than these members.

## EXAMPLES

Hereinafter, the present invention will be described more specifically based on Examples and Comparative Examples, but the present invention is not limited to the following Examples. First, measurement methods will be described.

<Measurement of glass transition temperature>

The glass transition temperature (Tg) by DSC (differential scanning calorimetry) of each of the optical films obtained in Examples and Comparative Examples was measured with a thermal analyzer ("DSC Q200", manufactured by TA Instruments). The measurement conditions were as follows: measurement sample amount: 5 mg, temperature range: from room temperature to 400°C, and temperature raising rate: 10°C/min.

<Measurement of retardation>

Rth and R0 of each of the optical films obtained in Examples and Comparative Examples were measured using a retardation measuring device (trade name: KOBRA) manufactured by Oji Scientific Instruments Co., Ltd. The retardation in the thickness direction Rth of the optical film is calculated by equation (A), where the refractive index in one direction in the film plane is Nx, the refractive index in a direction orthogonal to Nx is Ny, the refractive index in the thickness direction of the film is Nz, and the thickness of the optical film is d (nm). Here, Nx is a refractive index in the slow axis direction, Ny is a refractive index in the fast axis direction, and these satisfy Nx > Ny.

$$Rth = \{(Nx + Ny)/2 - Nz\} \times d\ (nm) \quad \cdots \ (A)$$

The in-plane retardation R0 of an optical film is calculated by equation (B) when the refractive index in one direction in the film plane is Nx, the refractive index in a direction orthogonal to Nx is Ny, and the thickness of the optical film is d (nm). Here, Nx is a refractive index in the slow axis direction, Ny is a refractive index in the fast axis direction, and these satisfy Nx > Ny.

$$R0 = (Nx - Ny) \times d\ (nm) \quad \cdots \ (B)$$

<Optical transmittances at 350 nm and 500 nm>

The optical transmittances at 350 nm and 500 nm in each of the optical films obtained in Examples and Comparative Examples were obtained by measuring the optical transmittance of light of 200 to 800 nm using a UV-Visible/NIR spectrophotometer V-670 manufactured by JASCO Corporation.

<Measurement of tensile strength>

The tensile strength of each of the optical films obtained in Examples and Comparative Examples was measured as follows using a precision universal tester ("Autograph AG-IS", manufactured by Shimadzu Corporation).
The optical film was cut into a width of 10 mm and a length of 100 mm to prepare a strip-shaped test piece. Next, using the precision universal tester, a tensile test was carried out under the conditions of a chuck distance of 50 mm and a tensile speed of 20 mm/min, and the tensile strength of the optical film was measured.

<Bending resistance test>

In accordance with ASTM D 2176-16, the number of folds of each of the optical films obtained in Examples and Comparative Examples was determined as follows. The optical film was cut into a strip shape having a width of 10 mm and a length of 120 mm using a dumbbell cutter. The cut optical film was set in the main body of an MIT type folding endurance tester ("Model 0530", manufactured by Toyo Seiki Seisaku-sho, Ltd.), and under the conditions of a test

speed of 175 cpm, a folding angle of 135°, a load of 0.75 kf, and a folding radius R of a folding clamp = 1 mm, the number of reciprocated folds in the back and front directions until the optical film was broken was measured, and this was defined as the number of folds.

<Method for measuring residual solvent amount>

(Thermogravimetry-differential thermal analysis (TG-DTA) measurement)

The residual solvent amount of each of the optical films obtained in Examples and Comparative Examples was measured using a TG-DTA measuring apparatus ("TG/DTA 6300", manufactured by Hitachi High-Tech Science Corporation).

About 20 mg of sample was obtained from the optical film. The sample was heated from room temperature to 120°C at a temperature raising rate of 10°C/min and held at 120°C for 5 minutes, and then the mass change of the sample was measured while raising the temperature (heating) to 400°C at a temperature raising rate of 10°C/min.

From the results of TG-DTA measurement, the mass loss ratio S (% by mass) from 120°C to 250°C was calculated according to the following equation (1).

$$S\ (\%\ \text{by mass}) = 100 - (W1/W0) \times 100 \quad (1)$$

[In equation (1), W0 is the mass of the sample after holding at 120°C for 5 minutes, and W1 is the mass of the sample at 250°C].

The mass loss ratio S calculated was defined as a residual solvent amount S (% by mass) in the optical film.

<Thickness>

The thicknesses of each of the optical films obtained in Examples and Comparative Examples was measured three times using a contact type digital thickness meter (manufactured by Mitutoyo Corporation), and the average value of the values measured three times was taken as the thickness of the optical film.

<Viscosity>

The viscosity of each of the varnishes obtained in Examples and Comparative Examples was measured using an E-type viscometer ("HBDV-II + P CP" manufactured by Brookfield) under the conditions of 25°C and a rotation speed of 3 rpm using 0.6 cc of the varnish as a sample.

<Weight average molecular weight (Mw)>

The weight average molecular weight (Mw) of each of the polyimide-based resins obtained in Synthesis Examples was measured under the following conditions using GPC.

(GPC conditions)

Instrument: Shimadzu LC-20A
Column: TSKgel GMHHR-M (mix column, exclusion limit molecular weight: 4,000,000)
Guard column: TSKgel guardcolumn HHR-H
Mobile phase: N-methyl-2-pyrrolidinone (NMP) with addition of 10 mM LiBr
* NMP used was of a grade for HPLC, and LiBr used was an extra pure reagent (anhydride).
Flow rate: 1 mL/min
Measurement time: 20 min
Column oven: 40°C
Detection: UV 275 nm
Washing solvent: NMP
Sample concentration: 1 mg/mL (* 20 wt% reaction mass was analyzed with dilution to 5 mg/mL with a mobile phase.)
Molecular weight calibration: Polystyrene standards manufactured by Polymer Laboratories Ltd. (17 molecular weights ranging from a molecular weight of 500 to a molecular weight of 4,000,000)

<Imidization rate>

The imidization rate of the polyimide-based resins obtained in Synthesis Examples was measured under the following conditions using NMR.

(NMR conditions)

10 mg of a polyimide-based resin was weighed, 0.75 ml of deuterated DMSO was added thereto, and then the resulting mixture was heated at 120°C for 20 minutes to dissolve the resin. The solution was transferred to an NMR tube, and 1H NMR measurement was carried out at 100°C using an AV600 instrument manufactured by Bruker Corporation. Protons derived from an imide group and protons derived from an amide group were assigned from a 1H NMR spectrum, and the imidization rate was determined using the following equation.

$$\text{Imidization rate} = \{\text{imide group integration ratio}/(\text{imide group integration ratio} + \text{amide group integration ratio})\} \times 100$$

<Synthesis Example 1>

A polyimide-based resin (6FDA-DAB) composed of a constitutional unit derived from 6FDA and a constitutional unit derived from 1,4-DAB was produced as follows by the method described in WO 2019/156717 A.

Under a nitrogen gas atmosphere, 178.78 kg of m-cresol (manufactured by Honshu Chemical Industry Co., Ltd.), 7.940 kg of 1,4-DAB (manufactured by ThermoFisher), and 40.120 kg of 6FDA (manufactured by Hakko Tsusho Co., Ltd.) were added to a reaction vessel equipped with a stirring blade. Next, 3.428 kg of isoquinoline (manufactured by FUJIFILM Wako Pure Chemical Corporation) was added thereto, then the temperature was raised to 158°C, and the mixture was stirred for 5 hours. Thereafter, 74.49 kg of m-cresol was added thereto, and the resulting reaction liquid was cooled to 50°C. While stirring, 118.97 kg of Solmix AP-1 (manufactured by Japan Alcohol Trading Co., Ltd.) was added, and 356.91 kg of Solmix AP-1 was further added, then the mixture was filtered. The filtered precipitate was washed with Solmix AP-1 (70.62 kg), further subjected to suspension filtration with Solmix AP-1 (141.23 kg) four times, and the precipitate was dried in a dryer at 70°C for 96 hours, affording 39.97 kg of a polyimide-based resin. The polyimide-based resin produced had a weight average molecular weight (Mw) of 252,000, and an imidization rate of 99.9%.

<Synthesis Example 2>

A polyimide-based resin was produced in the same manner as in Synthesis Example 1 except that the reaction conditions and the like were changed. The resulting polyimide-based resin had a weight average molecular weight (Mw) of 317,000, and an imidization rate of 99.9%.

<Synthesis Example 3>

Under a nitrogen gas atmosphere, 178.56 kg of m-cresol (Honshu Chemical Industry Co., Ltd.), 7.961 kg of 1,4-DAB (ThermoFisher), and 40.112 kg of 6FDA (Hakko Tsusho Co., Ltd.) were added to a reaction vessel equipped with a stirring blade. Next, 3.424 kg of isoquinoline (manufactured by FUJIFILM Wako Pure Chemical Corporation) was added thereto, then the temperature was raised to 130°C, and the mixture was stirred for 8 hours. Thereafter, the resulting reaction liquid was cooled to 50°C. While stirring, 93.38 kg of methanol (Sumitomo Chemical Co., Ltd.) was added thereto, and 242.13 kg of methanol was further added thereto, followed by filtration. The filtered precipitate was washed with methanol (70.62 kg), further subjected to suspension filtration with methanol (141.23 kg) four times, and the precipitate was dried in a dryer at 70°C for 96 hours, affording 41.70 kg of a polyimide-based resin. The polyimide-based resin produced had a weight average molecular weight (Mw) of 396,000, and an imidization rate of 100.0%.

<Example 1>

The polyimide-based resin obtained in Synthesis Example 1 was dissolved in cyclohexanone such that the solid content concentration was 15% by mass, and 2 phr of Sumisorb 340 was added as an ultraviolet absorber (UVA) to prepare a varnish. The viscosity of the varnish was 26.0 Pa ·s. Next, the resulting varnish was applied to a glass substrate, heated at 140°C for 10 minutes, further heated at 200°C for 30 minutes, and peeled off from the glass substrate, thereby affording an optical film having a thickness of 25 μm. The residual solvent amount of the resulting optical film

was 1.2% by mass.

<Example 2>

The polyimide-based resin obtained in Synthesis Example 2 was dissolved in cyclohexanone such that the solid content concentration was 13% by mass, and 2 phr of Sumisorb 340 was added as an ultraviolet absorber (UVA) to prepare a varnish. The viscosity of the varnish was 22.0 Pa ·s. Next, the resulting varnish was applied to a glass substrate, heated at 140°C for 10 minutes, further heated at 200°C for 30 minutes, and peeled off from the glass substrate, thereby affording an optical film having a thickness of 25 μm. The residual solvent amount of the resulting optical film was 1.4% by mass.

<Example 3>

The polyimide-based resin obtained in Synthesis Example 3 was dissolved in cyclohexanone such that the solid content concentration was 11% by mass, and 2 phr of Sumisorb 340 was added as an ultraviolet absorber (UVA) to prepare a varnish. The viscosity of the varnish was 17.5 Pa ·s. Next, the resulting varnish was applied to a glass substrate, heated at 140°C for 10 minutes, further heated at 200°C for 30 minutes, and peeled off from the glass substrate, thereby affording an optical film having a thickness of 25 μm. The residual solvent amount of the resulting optical film was 1.5% by mass.

<Comparative Example 1>

A cyclic olefin copolymer (COC) film ("ZF16", manufactured by Zeon Corporation) was used.

<Comparative Example 2>

The polyimide-based resin obtained in Synthesis Example 1 was dissolved in cyclohexanone such that the solid content concentration was 15% by mass, and 2 phr of Sumisorb 340 was added as an ultraviolet absorber (UVA) to prepare a varnish. The viscosity of the varnish was 26 Pa ·s. Next, the resulting varnish was applied to a glass substrate, heated at 140°C for 10 minutes, further heated at 180°C for 20 minutes, and peeled off from the glass substrate, thereby affording an optical film having a thickness of 25 μm. The residual solvent amount of the resulting optical film was 4.9% by mass.

The results of measuring the glass transition temperature (Tg), the in-plane retardation (nm), the retardation in the thickness direction (nm), the optical transmittance (%) at 350 nm, the optical transmittance (%) at 500 nm, the tensile strength (MPa), and the number of folds of the optical films obtained in Examples and Comparative Examples are shown in Table 1.

[Table 1]

| | Resin | Tg (°C) | In-plane retardation (nm) | Retardation in thickness direction (nm) | Optical transmittance at 350 nm | Optical transmittance at 500 nm | Tensile strength (MPa) | Number of folds (folds) |
|---|---|---|---|---|---|---|---|---|
| Example 1 | 6FDA-DAB | 181 | 5.9 | 55.6 | 1.1 | 90.5 | 90 | More than 200 K |
| Example 2 | 6FDA-DAB | 180 | 6.6 | 54.6 | 1.0 | 90.4 | 92 | More than 200 K |
| Example 3 | 6FDA-DAB | 180 | 18.9 | 59.9 | 1.1 | 90.4 | 90 | More than 200 K |
| Comparative Example 1 | COC | 163 | 1.6 | 5.7 | 88.5 | 89.3 | 60 | 0.4 K |
| Comparative Example 2 | 6FDA-DAB | 145 | 6.1 | 59.5 | 1.8 | 90.3 | 84 | More than 200 K |

As shown in Table 1, it was confirmed that the optical films obtained in Examples 1 to 3 had a remarkably low optical transmittance at 350 nm and a remarkably high Tg as compared with Comparative Example 1. In addition, it was confirmed that the optical films obtained in Examples 1 and 2 had a low retardation in a thickness direction and a remarkably high Tg as compared with Comparative Example 2. Furthermore, it was confirmed that the optical film obtained in Example 3 had a significantly high Tg as compared with Comparative Example 2. Therefore, it was found that the optical films obtained in Examples 1 to 3 had a low retardation, high heat resistance, and high UV-blocking property.

Furthermore, it was confirmed that the optical films obtained in Example 1 to 3 were higher in optical transmittance at 500 nm, tensile strength, and the number of folds than the optical film of Comparative Example 1, and higher in optical transmittance at 500 nm and tensile strength than the optical film of Comparative Example 2. Accordingly, it was found that the optical films obtained in Examples 1 to 3 were also superior in transparency, tensile strength, and bending resistance.

## Claims

1. An optical film having a glass transition temperature of 165°C or higher, an optical transmittance at 350 nm of 10% or less, an in-plane retardation of 30 nm or less, and a retardation in a thickness direction of 100 nm or less.

2. The optical film according to claim 1, wherein the glass transition temperature is higher than 180°C.

3. The optical film according to claim 1 or 2, wherein the optical film has an optical transmittance at 500 nm of 90% or more.

4. The optical film according to any one of claims 1 to 3, wherein the optical film has a tensile strength of more than 86 MPa.

5. The optical film according to any one of claims 1 to 4, wherein the optical film has a film thickness of 10 to 100 μm.

6. The optical film according to any one of claims 1 to 5, wherein the optical film has a solvent content of 3.0% by mass or less based on a mass of the optical film.

7. The optical film according to any one of claims 1 to 6, comprising a polyimide-based resin having a constitutional unit represented by Formula (1)

[Chemical Formula 1]

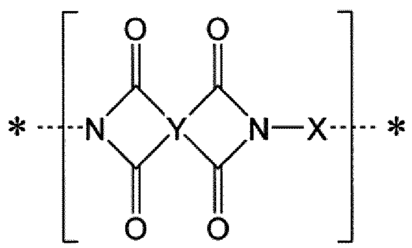
(1)

wherein X represents a divalent organic group, Y represents a tetravalent organic group, and * represents a bonding hand.

8. The optical film according to claim 7, wherein the constitutional unit represented by Formula (1) comprises a divalent aliphatic group as X.

9. The optical film according to claim 7 or 8, wherein the constitutional unit represented by Formula (1) comprises, as Y, a structure represented by Formula (2)

[Chemical Formula 2]

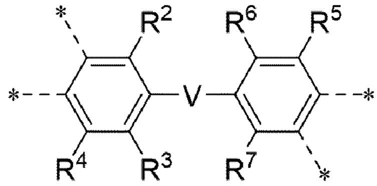

(2)

wherein $R^2$ to $R^7$ each independently represent a hydrogen atom, an alkyl group having 1 to 6 carbon atoms, an alkoxy group having 1 to 6 carbon atoms, or an aryl group having 6 to 12 carbon atoms, the hydrogen atoms contained in $R^2$ to $R^7$ are each independently optionally substituted by a halogen atom, V represents a single bond, -O-, $-CH_2-$, $-CH_2-CH_2-$, $-CH(CH_3)-$, $-C(CH_3)_2-$, $-C(CF_3)_2-$, $-SO_2-$, -S-, -CO-, or $-N(R^8)-$, $R^8$ represents a hydrogen atom or a monovalent hydrocarbon group having 1 to 12 carbon atoms which is optionally substituted with a halogen atom, and * represents a bonding hand.

**10.** The optical film according to any one of claims 7 to 9, wherein the polyimide-based resin contains a fluorine atom.

**11.** The optical film according to any one of claims 7 to 10, wherein the polyimide-based resin has a weight average molecular weight (Mw) of more than 250,000.

**12.** A flexible display device comprising the optical film according to any one of claims 1 to 11.

**13.** The flexible display device according to claim 12, further comprising a polarizer.

**14.** The flexible display device according to claim 12 or 13, further comprising a touch sensor.

## INTERNATIONAL SEARCH REPORT

International application No.
PCT/JP2021/025015

**A. CLASSIFICATION OF SUBJECT MATTER**

Int. Cl. G02B5/30(2006.01)i, C08G73/10(2006.01)i, C08J5/18(2006.01)i, C08L79/08(2006.01)i, G02B5/22(2006.01)i, G06F3/041(2006.01)i, G09F9/00(2006.01)i, G09F9/30(2006.01)i
FI: G02B5/30, G09F9/00 366A, G09F9/30 308Z, G06F3/041 495, C08G73/10, C08L79/08, G06F3/041 490, G09F9/00 313, G02B5/22, C08J5/18 CFG

According to International Patent Classification (IPC) or to both national classification and IPC

**B. FIELDS SEARCHED**

Minimum documentation searched (classification system followed by classification symbols)
Int. Cl. G02B5/30, C08G73/10, C08J5/18, C08L79/08, G02B5/22, G06F3/041, G09F9/00, G09F9/30

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-122857 A (KONICA MINOLTA, INC.) 13 July 2017 (2017-07-13), paragraphs [0089], [0106], [0131], examples | 1-14 |
| X | JP 2010-270162 A (KANEKA CORP.) 02 December 2010 (2010-12-02), paragraphs [0005], [0025], [0144]-[0146], examples 1-4 | 1-14 |
| X | WO 2017/010178 A1 (KONICA MINOLTA, INC.) 19 January 2017 (2017-01-19), paragraphs [0140]-[0142], [0151] | 1-14 |
| X | WO 2014/057949 A1 (FUJIFILM CORP.) 17 April 2014 (2014-04-17), paragraphs [0053], [0189], [0207], examples | 1-14 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26.07.2021 | 10.08.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/025015

C (Continuation). DOCUMENTS CONSIDERED TO BE RELEVANT

| Category* | Citation of document, with indication, where appropriate, of the relevant passages | Relevant to claim No. |
|---|---|---|
| X | WO 2018/173601 A1 (KONICA MINOLTA, INC.) 27 September 2018 (2018-09-27), paragraphs [0173], [0236], [0256]-[0258], examples | 1-14 |
| X | JP 2017-187617 A (KONICA MINOLTA, INC.) 12 October 2017 (2017-10-12), paragraphs [0286], [0376], [0410] | 1-14 |
| X | JP 2011-128480 A (TOSOH CORP.) 30 June 2011 (2011-06-30), examples 2-4 | 1-14 |
| X | JP 2008-242259 A (FUJIFILM CORP.) 09 October 2008 (2008-10-09), paragraph [0184], examples | 1-14 |
| X | JP 2007-057665 A (FUJIFILM CORP.) 08 March 2007 (2007-03-08), paragraphs [0041], [0060], example 1 | 1-14 |
| X | JP 2007-009182 A (KANEKA CORP.) 18 January 2007 (2007-01-18), paragraphs [0057], [0085], examples 1-18 | 1-14 |
| X | JP 2006-267625 A (NITTO DENKO CORP.) 05 October 2006 (2006-10-05), paragraph [0085], examples | 1, 3-6, 12-14 |
| X | JP 2006-243266 A (FUJI PHOTO FILM CO., LTD.) 14 September 2006 (2006-09-14), paragraphs [0050], [0225], examples | 1-14 |
| X | JP 2002-331616 A (KANEKA CORP.) 19 November 2002 (2002-11-19), paragraphs [0012], [0063], examples 1-5 | 1-14 |
| X | US 2007/0188686 A1 (NITTO DENKO CORPORATION) 16 August 2007 (2007-08-16), paragraph [0129], example 2 | 1, 3-6, 12-14 |
| P, X | JP 2021-006624 A (SUMITOMO CHEMICAL CO., LTD.) 21 January 2021 (2021-01-21), paragraph [0109], examples | 11-14 |
| A | WO 2015/053237 A1 (MITSUBISHI CHEMICAL CORP.) 16 April 2015 (2015-04-16), entire text | 1-14 |

Form PCT/ISA/210 (continuation of second sheet) (January 2015)

**INTERNATIONAL SEARCH REPORT**
Information on patent family members

International application No.
PCT/JP2021/025015

| Patent Documents referred to in the Report | Publication Date | Patent Family | Publication Date |
|---|---|---|---|
| JP 2017-122857 A | 13.07.2017 | (Family: none) | |
| JP 2010-270162 A | 02.12.2010 | (Family: none) | |
| WO 2017/010178 A1 | 19.01.2017 | (Family: none) | |
| WO 2014/057949 A1 | 17.04.2014 | US 2015/0212368 A1<br>paragraphs [0207], [0426], [0480], examples<br>KR 10-2015-0055013 A<br>TW 201421081 A | |
| WO 2018/173601 A1 | 27.09.2018 | KR 10-2019-0116457 A | |
| JP 2017-187617 A | 12.10.2017 | (Family: none) | |
| JP 2011-128480 A | 30.06.2011 | (Family: none) | |
| JP 2008-242259 A | 09.10.2008 | (Family: none) | |
| JP 2007-057665 A | 08.03.2007 | US 2007/0046871 A1<br>paragraphs [0061], [0079], example 1 | |
| JP 2007-009182 A | 18.01.2007 | (Family: none) | |
| JP 2006-267625 A | 05.10.2006 | US 2007/0279553 A1<br>paragraph [0135], examples<br>WO 2006/100901 A1<br>CN 1969226 A<br>KR 10-2007-0032666 A<br>TW 200643571 A | |
| JP 2006-243266 A | 14.09.2006 | (Family: none) | |
| JP 2002-331616 A | 19.11.2002 | (Family: none) | |
| US 2007/0188686 A1 | 16.08.2007 | JP 2006-285208 A<br>WO 2006/095518 A1<br>CN 1954252 A<br>KR 10-2007-0069090 A<br>TW 200639535 A | |
| JP 2021-006624 A | 21.01.2021 | (Family: none) | |
| WO 2015/053237 A1 | 16.04.2015 | CN 105612441 A<br>KR 10-2016-0068764 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004156048 A
- JP 2005336243 A
- WO 2019156717 A